(19) Europäisches Patentamt
European Patent Office
Office européen des brevets

(11) EP 0 388 809 B1

(12) EUROPEAN PATENT SPECIFICATION

(45) Date of publication and mention of the grant of the patent:
**24.04.1996 Bulletin 1996/17**

(51) Int Cl.[6]: **C08L 59/00**
// (C08L59/00, 33:26, 1:00), (C08L59/00, 33:04, 1:00)

(21) Application number: **90104990.8**

(22) Date of filing: **16.03.1990**

(54) **Polyacetal resins containing non-meltable polymer stabilizers or cellulose stabilizers**

Polyacetalharze, die nichtschmelzbare Polymer- oder Cellulosestabilisatoren enthalten

Résine de polyacétals contenant des stabilisants polymères ou cellulosiques non fusibles

(84) Designated Contracting States:
**AT BE CH DE ES FR GB IT LI NL**

(30) Priority: **17.03.1989 US 327664**
**22.02.1990 US 483603**

(43) Date of publication of application:
**26.09.1990 Bulletin 1990/39**

(73) Proprietor: **E.I. DU PONT DE NEMOURS AND COMPANY**
**Wilmington Delaware 19898 (US)**

(72) Inventors:
- **Novak, Ernest Richard**
**Vienna, West Virginia 26105 (US)**
- **Kosinski, Leonard Edward Raymond**
**Washington, West Virginia 26181 (US)**

(74) Representative: **Abitz, Walter, Dr.-Ing. et al**
**Patentanwälte Abitz & Partner**
**Postfach 86 01 09**
**D-81628 München (DE)**

(56) References cited:
**EP-A- 0 381 943**
**FR-A- 2 439 803**
**US-A- 9 015 840**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### BACKGROUND

### Technical Field

This invention relates to certain polyacetal compositions which are characterized by improved stability during processing, said improved stability being due to the incorporation therein of at least one non-meltable polymer stabilizer or at least one microcyrstalline or fibrous cellulose stabilizer.

Polyacetal compositions are generally understood to include compositions based on homopolymers of formaldehyde, the terminal groups of which are end-capped by esterification or etherification, as well as copolymers of formaldehyde or of cyclic oligomers of formaldehyde and other monomers that yield oxyalkylene groups with at least two adjacent carbon atoms in the main chain, the terminal groups of which copolymers can be hydroxyl terminated or can be end-capped by esterification or etherification. The proportion of the comonomers can be up to 20 weight percent. Compositions based on polyacetals of relatively high number average molecular weight, e.g., 10,000 to 100,000, are useful in preparing semi-finished and finished articles by any of the techniques commonly used with thermoplastic materials, e.g., compression molding, injection molding, extrusion, blow molding, rotational molding, melt spinning, stamping and thermoforming. Finished articles made from such compositions possess desirable physical properties, including high stiffness, strength, low coefficient of friction, and good solvent resistance.

However, in certain applications, it would be desirable to have greater stability during processing than has heretofore been possible with conventional polyacetal compositions or even with polyacetal compositions containing conventional stabilizers. The non-meltable polymer stabilizers and the microcrystalline or fibrous cellulose stabilizers of the present invention impart such improved stability to the polyacetal resin. The non-meltable polymer stabilizer useful in the compositions of the present invention is a polymer that is non-meltable at the temperature at which the polyacetal is melt processed, has a small number average particle size, both before and after melt processing, and contains formaldehyde reactive nitrogen groups or formaldehyde reactive hydroxyl groups or both. The microcrystalline or fibrous cellulose stabilizers useful in the compositions of the present invention are derived from naturally occurring cellulose and are non-meltable at the temperature at which the polyacetal is melt processed. The microcrystalline cellulose stabilizer has an average particle size of 100 microns or less.

### Description of Related Art

Polymers containing nitrogen groups and/or hydroxyl groups have been known in the art to stabilize acetal resins. However, the particular thermal stabilizers of the present invention, which contain formaldehyde reactive hydroxyl groups and/or formaldehyde reactive nitrogen groups (said formaldehyde reactive nitrogen groups being predominantly present on the sides of the polymer backbone), and which also have a small number average particle size and are non-meltable at the temperature at which the polyacetal is melt processed, have not been taught in the art and, in some cases, have been taught away from by the art. In spite of the teachings in the art, which are highlighted below, the particular stabilizers of the present invention significantly improve the stability of polyacetal resins.

Japanese Patent Application Publication 42-7107, published September 11, 1967 by applicant Teijin K.K., discloses a composition of polyoxymethylene or copolymer composition comprising polyoxymethylene polymer or its copolymer and a copolymer of acrylamide and styrene or vinyl napthalene. It is required that the copolymer of acrylamide and styrene or vinyl napthalene have a melting point equal to or below the melting point of the polyoxymethylene polymer or copolymer. The reference teaches away from the use of a non-meltable polymer stabilizer. It also teaches that acrylamide homopolymer is only slightly compatible with polyoxymethylene polymer or copolymer, is not thermally stable, causes considerable discoloration, and has only a slight effect for improving the heat stability or other properties of polyacetal.

Japanese Patent Publication Koho 43-14329, published June 17, 1968 by applicant Mitsubishi Kasei Kogyo K.K., discloses a method of stabilizing formaldehyde polymers consisting of an addition of a copolymer of acrylamide or an acrylamide derivative. There is no teaching that acrylamide homopolymer is a stabilizer for polyacetal, nor is there recognition in this reference of the importance of the non-meltable nature of the stabilizer or of its particle size in achieving improvements in thermal stability of the magnitude achieved herein.

Japanese Patent Application Publication Kohai 59-213752, published May 19, 1983 by applicant Asahi Kosei Kogyo K.K., discloses a polyacetal composition containing a fine poly-beta-alanine powder as a heat stabilizer, wherein the poly-beta-alanine is obtained by hydrogen transfer polymerization of acrylamide. Hydrogen transfer polymerization yields nylon-3, wherein the majority of formaldehyde reactive nitrogen groups are in the backbone of the polymer. The reference teaches away from preparation of a polymer stabilizer having a high degree of formaldehyde reactive nitrogen groups on the sides of the polymer backbone by disclosing that if less than 0.02 moles of the catalyst/mole of acrylamide

is used, the vinyl polymer (i.e., polyacrylamide, wherein the formaldehyde reactive nitrogen groups are on the sides of the polymer backbone) tends to be generated at an undesirable degree. Further, there is no recognition of the particular parameters required for the polymer stabilizers of the present invention. Even further, in an application later filed by Asahi (i.e., West German Published Application No. P3715117.7, discussed below), it is stated that the stabilizers of this reference are still inadequate with regard to heat resistance and the absence of discoloration under heat.

West German Published Application DE-C-3715117, published December 3, 1984 by Asahi Kasei Kogyo K.K., discloses a thermal stabilizer for polyacetal purported to be improved over that of the Japanese JP-A-59-21375 reference. In this particular reference, there is disclosed as a thermal stabilizer for polyacetal a poly-beta-alanine compound containing:

(X) monomer units having the formula

$$-(CH_2CH_2CONH)-$$

and

(Y) monomer units having the formula

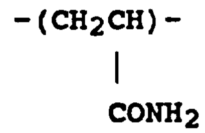

characterized in that the content of monomer units (Y) lies in the range from 1.4 to 10 mM per gram of the compound, preferably from 5 to 9 mM per gram of the compound. This reference clearly teaches away from a high percentage of (Y) monomer units, as evidenced by the preferred range of (Y) monomer units and by the statement that excellent characteristics cannot be obtained if poly-B-alanine (corresponding to poly-X) is merely mixed with a polyacrylamide (corresponding to poly-Y). This indicates that poly-Y, by itself, is not effective without interaction from poly-X. The reference also does not recognize the importance of the particular parameters of the present invention.

European Patent Application Publication No. 0 245 962, published November 19, 1987 by applicant E. I. du Pont de Nemours and Co., Inc. (inventor E. R. Novak) discloses a thermal stabilizer for polyacetal consisting of polymers and oligomers containing both hydroxyl groups and at least one other functional group that is a stronger Lewis base than the hydroxyl groups. Excessively high stabilizer viscosity (from molecular weight or chemical composition) is undesirable because it can make it difficult to disperse the stabilizer in the polyacetal. U.S. Patent 4,766,168 & EP-A-242 176, issued August 23, 1988 to N. E. West and assigned to E. I. du Pont de Nemours and Co., Inc. discloses a thermal stabilizer for polyacetal consisting of hydroxy containing polymers and hydroxy containing oligomers. Neither reference recognizes the importance of the stabilizer particle size and the non-meltable nature of the stabilizer with respect to obtaining thermal stability of the magnitude demonstrated herein.

U.S. Patent 3,204,014, granted August 31, 1965 to Green, discloses a thermally stable polyacetal composition comprising a polyacetal and a ternary stabilizer system comprised of (a) a copolymer of N-vinylpyrrolidone and a monoolefinic monomer copolymerizable therewith, (b) a phenolic antioxidant, and (c) a diester of 3,3'-thiodipropionic acid. There is no recognition of the importance of the average particle size or the non-meltable nature of the stabilizer.

U.S. Patent 3,219,727, granted November 23, 1965 to Kray, discloses polyoxymethylene compositions having enhanced heat stability due to the incorporation therein of a vinyl polymer having side chains containing the structure

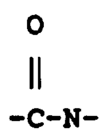

and particularly containing groups of the class consisting of amide groups and lactam groups. Although there is disclosed in this reference stabilizers for polyacetal containing nitrogen groups, there is no recognition of the importance of small number average particle size in this reference, nor is there recognition that the stabilizer should be non-meltable, nor is there exemplified any of the particular stabilizers of the present invention, said stabilizers having a small number average particle size and being non-meltable.

U.S. Patent 3,235,531, granted February 15, 1966 to Walker, discloses a method for stabilizing oxymethylene copolymer. U.S. Patent 3,210,322, granted October 5, 1965 to Polly discloses a method of treating a trioxane polymerization product comprised of an oxymethylene polymer, a trioxane polymerization catalyst, and unreacted trioxane. U.S. Patent 3,236,929, granted February 22, 1966 to Jupa, discloses a method of injection molding oxymethylene copolymers. U.S. Patent 3,418,280, granted to Orgen, discloses a method of stabilizing a polymer which is susceptible to thermal degradation because it contains monomeric units susceptible to degradation. In the above four references, the oxymethylene polymer or copolymer may contain thermal stabilizers such as substituted polyacrylamides or compounds having 1-6 amide groups. None of the references recognize the particular parameters of the present invention, nor do any exemplify the particular stabilizer of the present invention.

U.S. Patent 4,230,606, granted October 28, 1980 to Amann, discloses a melamine-formaldehyde polycondensate as a thermal stabilizer for polyoxymethylene. It is advantageous to form the melamine-formaldehyde precondensate in the presence of one or more protective colloids, which may include copolymers of acrylamide. There is no suggestion that copolymers of acrylamides are stabilizers for polyacetal.

None of the references discussed or listed above disclose the particulars of the present invention nor do any exemplify the specific non-meltable polymer stabilizers claimed herein.

References relating to the use of certain types of cellulose in polyacetal are as follows:

U.S. patent 4,722,662 discloses a process for manufacturing oxymethylene copolymers stabilized against thermal degradation, comprising the heating of the copolymer in an aqueous medium containing water and a disubstituted cellulose ether to hydrolyze unstable oxymethylene ends and then separating said oxymethylene copolymer from said aqueous medium containing a disubstituted cellulose ether. Disubstituted cellulose ethers are known thermoplastics.

U.S. patent 4,111,887 discloses polyoxymethylene molding compositions exhibiting improved physical properties comprising an admixture of a polyoxymethylene polymer, a fibrous reinforcement which can include cellulosic fiber, and a polycarbodiimide.

U.S. patent 3,406,129 discloses melt blends of moldable cellulose polymer having free hydroxyl groups with up to 50% of acetal polymer and U.S. 3,406,130 discloses colloïdal dispersions of such blends with certain solvents for the cellulose polymer, which compositions are alleged to have improved melt strength and elongation. U.S. 3,406,129 specifically teaches that the use of greater than 50 weight percent polyacetal is detrimental to the melt blend. Further, the cellulose disclosed in these references is neither microcrystalline nor fibrous cellulose as it is moldable, and therefore, meltable at the melt processing temperature of polyacetal.

While some of the references discussed above disclose incorporating certain particular cellulosics into polyacetal compositions, none disclose the specific types of cellulose used in the compositions of the present invention, nor do any disclose the unexpectedly improved stability in polyacetal compositions that results from the incorporation therein of said types of cellulose.

## SUMMARY OF THE INVENTION

This invention relates to certain polyacetal compositions stabilized with 0.05 to 3 weight percent of certain polymer stabilizers containing formaldehyde reactive hydroxyl groups and/or formaldehyde reactive nitrogen groups, said polymer stabilizers having a number average particle size, in the polyacetal, of less than ten microns and being non-meltable in that the polymer stabilizers have a major melting point higher than the temperature at which the polyacetal is melt processed or, in the alternative, they are non-meltable if the major melting point is lower than the temperature at which the polyacetal is melt processed, but the polymer stabilizers do not undergo significant melt flow during the melt processing of the polyacetal. The above weight percent is based upon the weight of the polyacetal and the polymer stabilizer. The formaldehyde reactive nitrogen groups, when present, are present such that the amount of formaldehyde reactive nitrogen groups on the sides of the polymer backbone is at least three times as great as the amount of said groups, if any, present in the backbone of the polymer stabilizer.

This invention also relates to certain polyacetal compositions stabilized with 0.05 to 5 weight percent of at least one microcrystalline or fibrous cellulose stabilizer, both of which are non-meltable at the temperature at which the polyacetal is melt processed and both of which are derived from naturally occurring cellulose. The above weight percent is based upon the weight of the cellulose stabilizer and the polyacetal polymer.

The compositions of the present invention are characterized as having improved thermal stability.

## DETAILED DESCRIPTION OF THE INVENTION

Polyacetal polymers are known to be thermally unstable in the absence of stabilizing agents. To alleviate such problem, typical commercially available polyacetal compositions are stabilized with polyamide (such as disclosed in Alsup et al, U.S.P. 2,993,025). However, it has been found that polyamides can react with formaldehyde released during processing, resulting in the reaction products and/or decomposition products contaminating the molded article. As such, there exists a continuing need to develop effective and efficient stabilizers for polyacetal compositions.

It has been found that polyacetals can be formulated into compositions having improved processing stability. More specifically, when polyacetals are melt processed with certain non-meltable polymer stabilizers containing formaldehyde reactive hydroxyl groups and/or formaldehyde reactive nitrogen groups, said polymers having a number average particle size of less than 10 microns, both before and after melt processing with the polyacetal and being non-meltable at the temperature at which the polyacetal is melt processed, the resulting compositions are characterized by improved processing stability as measured by, for example, lower evolution of formaldehyde, improved mold deposit, improved

color retention, improved melt stability, and reduced contamination.

It has also been found that polyacetals can be formulated into compositions having improved stability by the inclusion therein of either microcrystalline or fibrous cellulose stabilizers. Such compositions are characterized as having improved thermal stability, as measured by lower evolution of formaldehyde. Both the microcrystalline and fibrous cellulose stabilizers, which are derived from naturally occurring cellulose and which are non-melting at the temperature at which polyacetal is melt processed, used in the compositions of the present invention have been found to not degrade as readily as the conventional polyamide (or nylon) stabilizers.

To achieve the improvements mentioned above when a non-meltable polymer is incorporated into polyacetal as a stabilizer, the compositions of the present invention consist essentially of (a) 0.05 to 3 weight percent non-meltable polymer stabilizer and (b) 97 to 99.95 weight percent polyacetal polymer. Preferably, the compositions consist essentially of 0.15 to 1.5 weight percent of the non-meltable polymer stabilizer and 98.5 to 99.85 weight percent of the polyacetal polymer. More preferably, the compositions consist essentially of 0.2 to 1.0 weight percent of the non-meltable polymer stabilizer and 99.0 to 99.8 weight percent of the polyacetal polymer. The above weight percents are based upon the weight of the polyacetal polymer and the non-meltable polymer stabilizer only. Higher amounts of the non-meltable polymer stabilizer can be used and the thermal stability of the polyacetal may be improved; however, with increased loading of the non-meltable polymer stabilizer, the physical properties of the polyacetal may decrease.

To achieve the improvements mentioned above when microcrystalline or fibrous cellulose is incorporated into polyacetal as a stabilizer, the compositions of the present invention consist essentially of (a) 0.05 to 5 weight percent microcrystalline cellulose or fibrous cellulose and (b) 95 to 99.95 weight percent polyacetal polymer. Preferably, the compositions consist essentially of 0.05 to 2 weight percent microcrystalline or fibrous cellulose stabilizer and 98 to 99.95 weight percent polyacetal polymer. Most preferably, the compositions consist essentially of (a) 0.05 to 1 weight percent microcrystalline or fibrous cellulose stabilizer and 99 to 99.95 weight percent polyacetal polymer. All the above-mentioned weight percents are based upon the weight of the microcrystalline or fibrous cellulose stabilizer and the polyacetal polymer only.

It should be understood that the compositions of the present invention can include, in addition to the polyacetal and the stabilizer polymer, other ingredients, modifiers, and additives as are generally used in polyacetal molding resins, including co-stabilizers (such as those disclosed in U.S. Patent Nos. 3,960,984; 4,098,843; and 4,766,168), anti-oxidants, pigments, colorants, UV stabilizers, toughening agents, reinforcing agents, hindered amine stabilizers, lubricants, glass fibers, nucleating agents, and fillers. It should also be understood that some pigments and colorants can, themselves, adversely affect the stability of polyacetal compositions.

## The Polyacetal Polymer

The term "polyacetal" as used herein includes homopolymers of formaldehyde or of cyclic oligomers of formaldehyde, the terminal groups of which are end-capped by esterification or etherification, and copolymers of formaldehyde or of cyclic oligomers of formaldehyde and other monomers that yield oxyalkylene groups with at least two adjacent carbon atoms in the main chain, the terminal groups of which copolymers can be hydroxyl terminated or can be end-capped by esterification or etherification.

The polyacetals used in the compositions of the present invention can be branched or linear and will generally have a number average molecular weight in the range of 10,000 to 100,000, preferably 20,000 to 75,000. The molecular weight can conveniently be measured by gel permeation chromatography in m-cresol at 160°C using a Du Pont PSM bimodal column kit with nominal pore size of 60 and 1000 A. Although polyacetals having higher or lower molecular weight averages can be used, depending on the physical and processing properties desired, the polyacetal molecular weight averages mentioned above are preferred to provide optimum balance of good mixing of the various ingredients to be melt blended into the composition with the most desired combination of physical properties in the molded articles made from such compositions.

As indicated above, the polyacetal can be either a homopolymer, a copolymer, or a mixture thereof. Copolymers can contain one or more comonomers, such as those generally used in preparing polyacetal compositions. Comonomers more commonly used include alkylene oxides of 2-12 carbon atoms and their cyclic addition products with formaldehyde. The quantity of comonomer will not be more than 20 weight percent, preferably not more than 15 weight percent, and most preferably about 2 weight percent. The most preferred comonomer is ethylene oxide. Generally polyacetal homopolymer is preferred over copolymer because of its greater stiffness and strength. Preferred polyacetal homopolymers include those whose terminal hydroxyl groups have been end-capped by a chemical reaction to form ester or ether groups, preferably acetate or methoxy groups, respectively.

## The Non-meltable Polymer Stabilizer

The non-meltable polymer stabilizer used in the compositions of the present invention is a homopolymer or copolymer containing formaldehyde reactive nitrogen groups, formaldehyde reactive hydroxyl groups, or both formaldehyde reactive nitrogen and formaldehyde reactive hydroxyl groups. By "formaldehyde reactive" it is meant that the hydroxyl group contains an oxygen with a hydrogen atom bonded to it and the nitrogen group contains a nitrogen with one or two hydrogen atoms bonded to it. Formaldehyde will react with the -OH or the -NH bonds of the stabilizer polymer. These reactive sites are referred to herein as formaldehyde reactive sites. It is preferred that the non-meltable polymer stabilizer contain formaldehyde reactive nitrogen or hydroxyl groups having the maximum number of formaldehyde reactive sites. For example, a non-meltable polymer stabilizer containing formaldehyde reactive nitrogen groups wherein there are two hydrogen atoms attached directly to the nitrogen atom (i.e., two formaldehyde reactive sites in the group) is preferred over one containing formaldehyde reactive nitrogen groups wherein there is only one hydrogen atom attached directly to the nitrogen atom (i.e., one formaldehyde reactive site in the group).

The non-meltable polymer stabilizer has at least ten repeat units. It preferably has a weight average molecular weight of greater than 5,000, most preferably greater than 10,000. Higher weight average molecular weights are most preferred and further, such higher weight average molecular weights may be advantageous for reducing mold deposit formation.

The non-meltable polymer stabilizer is non-meltable at the temperature at which the polyacetal is melt processed. By the term "non-meltable", it is meant that the non-meltable polymer stabilizer has its "major melting point" above the temperature at which the polyacetal is melt processed and thus remains essentially a solid during melt processing of the polyacetal. Alternatively, a non-meltable polymer stabilizer is "non-meltable" if the polymer stabilizer has its "major melting point" below the temperature at which the polyacetal is melt processed but it does not undergo significant melt flow at that temperature. The melt flow rate of the non-meltable polymer stabilizer may not be significant because the non-meltable polymer stabilizer has a high viscosity, attributed to, for example, high molecular weight or crosslinking. In the case where the non-meltable polymer stabilizer has its "major melting point" below the temperature at which the polyacetal is melt processed, the melt flow rate of the non-meltable polymer stabilizer, as measured in accordance with ASTM-D 1238, is preferably less than one-tenth that of the polyacetal. The "major melting point" of the non-meltable polymer stabilizer can be determined on a differential scanning calorimeter. "Major melting point" is the temperature at which the amount of heat absorbed, by the non-meltable polymer stabilizer, is greatest; i.e., it is the temperature at which the polymer stabilizer shows the greatest endotherm.

Polyacetals are usually melt processed at melt temperatures of about 170-260°C, preferably 185-240°C, most preferably 200-230°C. The non-meltable polymer stabilizer should be non-meltable at the particular temperature at which the polyacetal is melt processed.

The non-meltable polymer stabilizer must also have a number average particle size of less than 10 microns after melt processing with the polyacetal. It further should have a number average particle size of less than 10 microns before melt processing with the polyacetal. It should be understood that a high degree of loose agglomeration of particles in the non-meltable polymer stabilizer may occur during the preparation and isolation of the non-meltable polymer stabilizer, such as, for example, during the drying of the non-meltable polymer stabilizer. In order for one to obtain a true and accurate measurement of the number average particle size, prior to melt processing, for a non-meltable polymer stabilizer containing a high degree of loose agglomerates, the loose agglomerates should be broken up prior to measuring the number average particle size of the non-meltable polymer stabilizer or, alternatively, they should be discounted in making said measurement. Whether or not a polymer stabilizer contains a high degree of loose agglomerates can be determined by standard techniques of transmission electron microscopy. The details of determining the number average particle size, both before and after melt processing, are disclosed below.

The formaldehyde reactive hydroxyl groups can be incorporated into the non-meltable polymer stabilizer by using an appropriate hydroxyl containing monomer, such as, for example, hydroxyl alkyl acrylates or methacrylates. Alternatively, the formaldehyde reactive hydroxyl groups can be generated on the non-meltable polymer stabilizer by transforming another group into a hydroxyl group, such as, for example, by hydrolysis of esters or epoxides, or by reduction of carbonyl groups. Regardless of the methods by which the formaldehyde reactive hydroxyl groups are incorporated, the non-meltable polymer stabilizer prepared therefrom must be non-meltable, or capable of being made non-meltable, at the temperature at which the polyacetal is melt processed.

Microcrystalline and fibrous cellulose stabilizers both contain formaldehyde reactive hydroxy groups and are both non-meltable at the melt processing temperature of polyacetal. Both are, however, derived from a naturally occurring substance (cellulose) and are described as distinct stabilizer compounds, with separate and distinct parameters, in detail below.

The formaldehyde reactive nitrogen groups can be incorporated into the non-meltable polymer stabilizer by using an appropriate nitrogen containing monomer, such as, for example, acrylamide and methacrylamide. Preferred nitrogen containing monomers are those that result in the non-meltable polymer stabilizer containing formaldehyde reactive nitrogen groups, wherein there are two hydrogen atoms attached to the nitrogen. The particularly preferred monomer is acrylamide which, when polymerized, results in a non-meltable polymer stabilizer having substantially all of the formaldehyde reactive nitrogen groups attached directly as a side chain of the polymer backbone or indirectly as a

side chain of the polymer backbone. Alternatively, the formaldehyde reactive nitrogen groups can be generated on the non-meltable polymer stabilizer by modification of the polymer or copolymer. The formaldehyde reactive nitrogen groups may be incorporated by either method as long as the resultant polymer prepared therefrom is non-meltable, or is capable of being made non-meltable, at the temperature at which the polyacetal is melt processed.

The quantity of the formaldehyde reactive hydroxyl or nitrogen groups in the non-meltable polymer stabilizer must be such that the atoms in the backbone to which the formaldehyde reactive groups are attached, either directly or indirectly, are separated from each other (i.e., connected to each other) by not more than twenty chain atoms. Preferably, the non-meltable polymer stabilizer will contain at least one formaldehyde reactive hydroxyl or nitrogen group per each twenty carbon atoms in the backbone of the polymer. More preferably, the ratio of formaldehyde reactive hydroxyl or nitrogen groups to carbon atoms in the backbone will be 1:2-1:10, most preferably 1:2-1:5.

The formaldehyde reactive nitrogen groups should be present in the non-meltable polymer stabilizer such that the amount of the formaldehyde reactive nitrogen groups as, or part of, the side chains of the polymer stabilizer backbone is at least 3 times, preferably at least ten times, the amount of the formaldehyde reactive nitrogen groups, if any, present in the backbone of the non-meltable polymer stabilizer. In other words, the formaldehyde reactive nitrogen groups, attached directly or indirectly to the atoms in the backbone of the non-meltable stabilizer, should be at least three times as great, preferably at least ten times as great, as those in the backbone of the non-meltable polymer stabilizer, if such are present. The formaldehyde reactive nitrogen groups attached directly or indirectly to the side of the polymer backbone are preferably present in a substantially greater quantity than the formaldehyde reactive nitrogen groups, if any, present in the the polymer backbone. Most preferably, nearly one hundred percent of the formaldehyde reactive nitrogen groups are attached to the sides of the polymer backbone.

The non-meltable polymer stabilizer can be a homopolymer or a copolymer, provided it is non-meltable. It is preferred that the polymer stabilizer be polymerized from acrylamide or methacrylamide monomer by free radical polymerization and that the polymer stabilizer prepared therefrom consist of at least 75 mole percent of a unit of the form

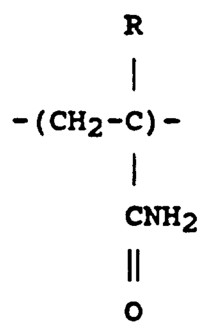

where R=hydrogen or methyl. More preferably, it consists of at least 90 mole percent of the above units, even more preferably, it consists of at least 95 mole percent of the above units, and most preferably, it consists of at least 99 mole percent of the above unit.

The non-meltable polymer stabilizer may be a copolymer in that it is polymerized from more than one monomer. The comonomer may or may not contain formaldehyde reactive nitrogen and/or formaldehyde reactive hydroxyl groups. Examples of other monomers that may be thus incorporated include styrene, ethylene, alkyl acrylates, alkyl methacrylates, N-vinylpyrrolidone, and acrylonitrile. The non-meltable polymer stabilizer that is a copolymer must still be non-meltable. It further must possess the required quantity of formaldehyde reactive hydroxyl and/or nitrogen groups, in the required ratio, and it must have the required number average particle size. The comonomer preferably should be added such that it does not unduly minimize the number of moles of formaldehyde reactive groups per gram of polymer stabilizer. Further, it should not unduly minimize the number of formaldehyde reactive sites per gram of polymer stabilizer.

Specific preferred stabilizers that are copolymeric include copolymers of hydroxypropyl methacrylate with acrylamide, methacrylamide, or dimethylaminoethyl methacrylate.

When the non-meltable polymer stabilizer has a high number of formaldehyde reactive hydroxyl groups in comparison to the number of formaldehyde reactive nitrogen groups or, alternatively, when it has only formaldehyde reactive hydroxyl groups, it may be advantageous to include other groups in the stabilizer that are basic. This is because for optimum performance as a stabilizer for polyacetal, the stabilizer should be reactive with both formaldehyde and acid. Preferably, these other groups are nitrogen containing groups, such as amines, amides, ureas, and urethanes.

The non-meltable polymer stabilizer must have a number average particle size of less than 10 microns, preferably less than 5 microns, and most preferably less than 2 microns, as measured before processing in polyacetal. Along with the polymer stabilizer being non-meltable, the number average particle size of the non-meltable polymer stabilizer is important in achieving the improved stability for polyacetal demonstrated herein. If the non-meltable polymer stabilizer particle size is, on average, too large, then the interaction between the polyacetal and the non-meltable polymer stabilizer can be negligible and the non-meltable polymer stabilizer may have greatly reduced effectiveness. Stability is related to the interaction that occurs between the polyacetal and the non-meltable polymer stabilizer and as such, it is desirable to have good interaction between the polyacetal and the polymer stabilizer. Maximizing the surface area/gram of non-meltable polymer stabilizer increases interaction between the non-meltable polymer stabilizer and the polyacetal. The surface area/gram of non-meltable polymer stabilizer increases as the particle size of the non-meltable polymer stabilizer decreases. Thus, a non-meltable polymer stabilizer with small particle size is highly desired.

If the non-meltable polymer stabilizer particle size is, on average, on the order of 10-100 microns, then the non-meltable polymer stabilizer may impart stability to the polyacetal but the physical properties of the articles manufactured from the polyacetal may be reduced. Relatively large particles may also cause uneven surface in the articles manufactured from polyacetal containing non-meltable polymer stabilizer with large particles. In some cases, it may however be desirable to produce articles with surfaces having reduced surface gloss. In that case, a non-meltable polymer stabilizer of large particle size, more near the upper limit of the number average particle size, may actually be preferred.

The small number average particle size of the non-meltable polymer stabilizer may be obtained directly during the polymerization of the monomer or comonomers. It is noted that microcrystalline and fibrous cellulose are derived from mutually occurring cellulose and as such, do not go through a synthetic polymerization process.

To obtain the small average particle size during the polymerization of the monomer or comonomers, the non-meltable polymer stabilizer polymerization is carried out by conventional dispersion polymerization methods in an organic media or by conventional emulsion polymerization methods in water, the techniques of each of which are well known in the art. Whether the polymerization technique is dispersion polymerization or emulsion polymerization, the non-meltable polymer stabilizer prepared therefrom should be insoluble in the polymerization media. Thus, the particular media selected for polymerization is dependent upon the particular monomer or comonomers chosen and the polymer that will result therefrom. For example, where acrylamide or methacrylamide is a monomer for polymerization, the preferred media is a lower alkyl alcohol. The polymerization may be by addition or condensation polymerization or free radical polymerization. The most preferred method is one that will result in the number of formaldehyde reactive sites in the formaldehyde reactive group being maximized. Generally, free radical polymerization is the preferred method of polymerization. Non-meltable polymer stabilizer prepared from acrylamide is most preferably prepared by free radical polymerization. In any event, the polymerization method must be such that it results in a polymer stabilizer having formaldehyde reactive nitrogen groups or formaldehyde reactive hydroxyl groups in the quantities and amounts previously defined.

In some cases, the polymer stabilizer produced by the polymerization to small particle size will have a sufficient major melting point or have a sufficiently low melt flow rate such that it is non-meltable as polymerized. In other cases, the polymer stabilizer may not be non-meltable as polymerized but, prior to or during the melt processing in polyacetal, it will crosslink, due to, for example, application of heat, to a sufficiently high molecular weight such that it has a low melt flow rate and is non-meltable at the temperature at which the polyacetal is melt processed. Whether the polymer stabilizer will be non-meltable as polymerized or will become non-meltable after polymerization depends upon the nature of the particular monomer or comonomers being polymerized.

In some cases, the polymer stabilizer produced by the polymerization of the monomer or comonomers will not be non-meltable as polymerized and it will not become non-meltable subsequent to polymerization. This can be easily determined by measuring the melting point or melt flow rate of the stabilizer after it has been compounded with polyacetal. In such cases, it is desirable to include at least one monomer that crosslinks the polymer stabilizer either during polymerization or at a later time. Monomers that will cause crosslinking during polymerization include polyfunctional, unsaturated monomers, such as, for example, acrylates, methacrylates, acrylamides, and methacrylamides, and derivatives thereof. Specifically preferred monomers are ethylene glycol dimethacrylate and N,N′-methylenebisacrylamide. Monomers that may cause crosslinking after polymerization of the stabilizer polymer is complete include, for example, glycidyl methacrylate, acrylic acid, methacrylic acid, and derivatives thereof. The crosslinking monomer should be added in an amount that is sufficient to yield a polymer stabilizer that is non-meltable at the temperature at which the polyacetal is melt processed.

During the polymerization to small particle size in an organic media, with or without a crosslinking monomer, it can be advantageous to have a dispersing aid present. During the polymerization to small particle size in an emulsion, it can be advantageous to have an emulsifier present. Dispersing aids and the methods of preparing them are well known in the art. A description of the methods of making and choosing dispersing aids is included in Dispersion Polymerization in Organic Media (by K. E. J. Barrett, New York: John Wiley & Sons, 1975). Particularly preferred dispersing aids include polyethylene glycol and its derivatives, methyl methacrylate copolymers, and poly(oxypropylene)-poly(oxyethylene) glycol block copolymers. Emulsifiers and the method of preparing them are well known in the art. Emulsion polymerizations are discussed in Emulsion Polymerization Theory and Practice (by D. C. Blackley, New York: John Wiley & Sons, 1975).

The dispersant or dispersant solution or the emulsifier is added to the polymerization reaction vessel simultaneously with the monomer and polymerization medium, and, where applicable, comonomer and crosslinking monomer. When

a dispersant or dispersant solution or emulsifier is added to the stabilizer, it is advantageous remove the dispersant or dispersant solution or emulsifier from the stabilizer polymer by washing the stabilizer polymer, after it is prepared, with a solvent in which the dispersant solution or dispersant or emulsifier is soluble but in which the polymer stabilizer is insoluble. This is particularly true if the dispersant or dispersant solution or emulsifier is known to destabilize polyacetal. If the dispersant or dispersant solution or emulsifier is not known to destabilize polyacetal, it may be advantageous to leave it in the stabilizer polymer as it can act to reduce any agglomeration of particles that may occur during the drying of the polymer stabilizer.

The small number average particle size of the polymer stabilizer may alternatively be obtained subsequent to the polymerization of the monomer or comonomers, while the polymer stabilizer is still in the polymerization medium or is in solution. In such cases, the small number average particle size of the stabilizer may be obtained by adding a crosslinking monomer to the polymer stabilizer in the polymerization medium, after which the stabilizer polymer becomes insoluble in the medium. Alternatively, the small number average particle size of the stabilizer may be obtained by adding a solvent in which the stabilizer polymer is insoluble to the polymer stabilizer in the polymerization medium. Similarly, the polymer stabilizer in the polymerization medium may be added to a solvent in which the polymer stabilizer is insoluble. Small number average particle size can be obtained by other known means of separating the polymer from the polymerization medium. It can be advantageous to use dispersing aids or emulsifiers such as those previously described to separate the stabilizer polymer from the polymerization medium.

Any method may be used to prepare the polymer stabilizer provided that such method will yield a polymer stabilizer having small particles, with a number average size less than 10 microns, prior to melt processing with polyacetal. Further, the small particles should be non-meltable at the temperature at which the polyacetal is melt processed and should not coalesce or agglomerate to such an extent that they are not readily dispersible in the polyacetal melt.

The number average particle size of the non-meltable polymer stabilizer before it is melt processed with polyacetal can be measured by any means capable of determining number average particle size. The preferred means is the MICROTRAC II SMALL PARTICLE ANALYZER (ANALYZER), manufactured by Leeds & Northrup. By this method, the polymer stabilizer is added to a liquid, such as, for example, 2-propanol, and shaken by hand to disperse the polymer stabilizer in the liquid. From this dispersion, the number average particle size for the polymer stabilizer is determined by the ANALYZER, as is described in the Examples herein. In some cases, a high concentration of loose agglomerates may have occurred during the preparation of the polymer stabilizer. In such cases, more intensive mixing may be desired in order to break up the loose agglomerates. An example of a device capable of providing such intensive mixing is a "POLYTRON" (sold by Brinckman Instruments).

The number average particle size of the non-meltable polymer stabilizer after it has been melt processed with polyacetal should be less than 10 microns, preferably less than 5 microns, and most preferably less than 2 microns. It can be measured by any technique capable of measuring number average particle size for particles in a polymer. The preferred method of measuring the number average particle size of the non-meltable polymer stabilizer in the polyacetal is by transmission electron microscopy, described in detail in the Examples herein.

## The Microcrystalline or Fibrous Cellulose Stabilizer

Both microcrystalline cellulose and fibrous cellulose stabilizers are derived from naturally occurring cellulose, contain formaldehyde reactive hydroxy groups, and are non-meltable at the temperature at which polyacetal is melt processed. Both have been found to be effective as stabilizers for polyacetal. Microcrystalline cellulose is preferred.

Microcrystalline cellulose is known in the art and is commercially available. It is described in detail in U.S. 3,023,104, incorporated herein by reference, and it is referred to therein as "cellulose crystallite aggregates". Microcrystalline cellulose is also described in "Hydrolysis and Crystallization of Cellulose", Industrial and Engineering Chemistry, vol. 42, 502-507 (1950).

Consistent with that which is taught in U.S. 3,023,104, the microcrystalline cellulose useful in the compositions of the present invention can be obtained from a commercial source or can be prepared by standard techniques of acid hydrolysis of naturally occurring cellulose. In either case, the microcrystalline cellulose should meet the purity requirements described below. In the acid hydrolysis of cellulose, the acid dissolves any amorphous portion of the original cellulose chains. The undissolved portion remaining from such hydrolysis is in a particulate, non-fibrous or crystalline form, said form being the result of th disruption of the continuity of the fine structures between the crystalline and amorphous regions of the orginal cellulose. The undissolved portion, which is in crystalline form, is known to be non-melting at the melt processing tempeature of polyacetal. The melt processing tempeature of polyacetal generally does not exceed 280°C. The methods of preparing microcrystalline cellulose by the acid hydrolysis of cellulose are known to those in the art and are, for example, described in U.S. 3,023,104, column 2 and the examples.

The microcrystalline cellulose used in the compositions of the present invention has a certain level-off degree of polymerization. Level-off degree of polymerization is described in U.S. 3,023,104. More specifically, it is describe therein as being the point at which the cellulose that is subjected to acid hydrolysis reaches, after a certain period of time, a

substantially constant molecular weight. In other words, it is the point at which the number of repeating units or monomers, sometimes designated anhydroglucose units, which make up the cellulosic material, becomes relatively constant. It is then apparent that the degree of polymerization of the material has leveled off, hence the name level-off degree of polymerization.

Consistent with what is disclosed in U.S. 3,023,104, the microcrystalline cellulose useful in the present compositions has a preferred average level-off degree of polymerization of 125 to 375 anhydroglucose units. Ideally, within this range all of the material should have the same degree of polymerization but as this is difficult, if not impossible, to achieve, it is preferred that at least 85% of the material have an actual degree of polymerization not less than 50 and not more than 550. More preferably, within the average level-off degree of polymerization of 125 to 375, at least 90% of the material should have an actual degree of polymerization within the range of 75 to 500, and it is still more preferred that at least 95% of the material has an actual degree of polymerization in the range of 75 to 450. The more preferred aveage level-off degree of polymerization for the microcrystalline cellulose useful herein is in the range of 200 to 300, of which material at least 90% has an actual degree of polymerization in the range of 75 to 550. The most preferred average level-off degree of polymerization for the microcrystalline cellulose useful herein ranges from 175 to 225.

As taught in U.S. 3,023,104, the microcrystalline cellulose will usually have an average particle size no greater than 300 microns. For purposes of this invention, the average particle size is the point at which 50% of the particles are greater than average and 50% of the particles are less than average. Average particle size can be determined by standard techniques, such as microscopic inspection, gravitational sedimentation, sieve analysis, and electron microscopy. The preferred method of determining particle size is gravitational sedimentation.

It has been found that, for the compositions of the present invention, stability increases as the average particle size of the microcrystalline cellulose decreases. As such, although microcrystalline cellulose can have an average particle size up to about 300 microns, it is preferred that the average particle size of the microcrystalline cellulose used herein be 100 microns or less, more preferably 50 microns or less, and even more preferably 25 microns or less, and most preferably 10 microns or less.

Fibrous cellulose is known in the art and is commercially available. It can be prepared from naturally occurring cellulose by techniques readily available to those skilled in the art. For example, a fibrous cellulose can be made by pulverizing wood pulp and then subsequently purifying it to meet the purity requirements described below. It is also a naturally occurring substance, an example of which is cotton linter. Fibrous cellulose generally exists in the form of flat ribbons. The width and thickness of these flat ribbons of fibrous cellulose is not considered critical in achieving the results exemplified herein. In general, however, the width of these flat ribbons will be, on average, approximately 25 microns and the thickness of these flat ribbons will be, on average, 6 microns. The length of the flat ribbons of the fibrous cellulose is also not considered critical in achieving the results exemplified herein. Fibrous cellulose is commercially available over a range of average fiber length, including from 300 microns down through less than 22 microns. Although average fiber length is not considered critical, it is expected that stability results will improve as average fiber length decreases due to the increase that such a decrease in average fiber length causes in the surface area of the fibrous cellulose stabilizer.

Purity of the Stabilizer

It is important that the non-meltable polymer stabilizer, the microcrystalline cellulose stabilizer, and fibrous cellulose stabilizer used in the compositions of the present invention be substantially free of compounds which destabilize acetal resins.

In stabilizing ester-capped or partially ester-capped polyacetal homopolymer, the non-meltable polymer stabilizer, the microcrystalline cellulose stabilizer, and the fibrous cellulose stabilizer should be substantially free of basic materials which can destabilize the polyacetal. Basic impuritiesin the non-meltable polymer stabilizer should preferably be removed to levels of not more than 50 ppm and most preferably to not more than 10 ppm. For the microcrystalline and fibrous cellulose stabilizers, it has been found that higher levels of basic impurities can be tolerated but that such level is preferably not greatr than 200 ppm, more preferably, not greater than 10 ppm. In stabilizing polyacetal copolymer or homopolymer that is substantially all ether-capped, higher concentrations of basic materials can be tolerated. In addition, it should be understood that if the impurity is only weakly basic relatively higher amounts can be tolerated.

In stabilizing both homopolymer and copolymer polyacetal, acidic impurities in the non-meltable polymer stabilizer, the microcrystalline cellulose stabilizer, and the fibrous cellulose stabilizer should be minimized. Acidic impurities in the non-meltable polymer stabilizer should preferably be removed to levels of not more than 50 ppm and most preferably to not more than 10 ppm. For the microcrystalline and fibrous cellulose stabilizers, it has been found that higher levels of acidic impurities can be tolerated but that such level is preferably not greater than 250 ppm, more preferably not greater than 10 ppm. As with basic impurities, it should be understood that if the impurity is only weakly acidic, relatively higher amounts can be tolerated.

When acidic and/or basic impurities are present in the non-meltable polymer stabilizer, the microcrystalline cellulose stabilizer, or the fibrous cellulose stabilizer in amounts large enough to cause destabilization of the polyacetal compositions, the stabilizers should be purified before they are introduced into the compositions of the present invention. Stabilizers used in the compositions of the present invention can be purified by washing with an appropriate liquid, such as methanol and/or water. Non-meltable polymer stabilizers prepared with dispersants or emulsifiers that have destabilizing effects because, for example, they are highly acidic or highly basic, can be purified by washing the stabilizer with a solvent in which the dispersants or emulsifiers are soluble and in which the polymer stabilizer is insoluble. Volatile impurities in the microcrystalline or fibrous cellulose stabilizer can be removed by use of a vacuum oven.

With respect to the microcrystalline or fibrous cellulose stabilizers, and in addition to the above, destabilizing impurities that are likely to occur in commercially available microcrystalline and fibrous cellulose stabilizers that are useful in the compositions of the present invention can be assayed via (1) the pH of an aqueous suspension of 1-10 weight percent microcrystalline cellulose or fibrous cellulose, (2) the non-volatile ash content, and/or (3) the heavy metal content.

More specifically, it is recommended that for optimum results, the pH of an aqueous suspension of 1-10 weight percent of the microcrystalline cellulose or fibrous cellulose useful in the compositions of the present invention be in the range of 5-7 for homopolymer polyacetal and in the range of 5-8 for copolymer polyacetal. It is more preferred that the pH of the suspension be in the range of 5-7 for both homopolymer and copolymer polyacetal. It is recommended that the non-volatile ash content (ashing is conducted at greater than or equal to 800°C) of the microcrystalline cellulose or fibrous cellulose be less than 0.25%, more preferably less than 0.10%, and most preferably less than 0.02%. It is also recommended that the heavy metal content of the microcrystalline cellulose and the fibrous cellulose be less than 10 ppm. For maximum thermal stability cellulose used herein should be maintained within the range of 5-8, as described above.

Preparation of the Compositions

The compositions of the present invention can be prepared by mixing the stabilizer with the polyacetal polymer at a temperature above the melting point of the polyacetal polymer using any intensive mixing device conventionally used in preparing thermoplastic polyacetal compositions, such as rubber mills, internal mixers such as "Banbury" and "Brabender" mixers, single or multiblade internal mixers with a cavity heated externally or by friction, "Ko-kneaders", multibarrel mixers such as "Farrel Continuous Mixers", injection molding machines, and extruders, both single screw and twin screw, both co-rotating and counter rotating, both intermeshing and non-intermeshing. These devices can be used alone or in combination with static mixers, mixing torpedoes and/or various devices to increase internal pressure and/or the intensity of mixing, such as valves, gate or screws designed for this purpose. Extruders are preferred. Of course, such mixing should be conducted at a temperature below which significant degradation of the polyacetal will occur.

Shaped articles can be made from the compositions of the present invention using any of several common methods, including compression molding, injection molding, extrusion molding, blow molding, rotational molding, melt spinning, and thermoforming. Injection molding is preferred. Examples of shaped articles include sheet, profiles, rod stock, film, filaments, fibers, strapping, tape tubing, and pipe. Such shaped articles can be post treated by orientation, stretching, coating, annealing, painting, laminating, and plating. Such shaped articles and scrap therefrom can be ground and remolded.

Processing conditions used in the preparation of the compositions of the present invention and shaped articles made therefrom include melt temperatures of about 170-260°C, preferably 185-240°C, most preferably 200-230°C. When injection molding the compositions of the present invention, the mold temperature will generally be 10-120°C, preferably 10-100°C, and most preferably about 50-90°C.

## EXAMPLES

In the following examples, there are shown specific embodiments of the present invention and certain comparisons with embodiments of control experiments outside the limits of the present invention. It will be seen that the compositions of the present invention are characterized by improved stability. All temperatures are in degrees Celsius unless otherwise specified. Measurements not originally in SI units have been so converted and rounded where appropriate.

### I. SYNTHESIS OF NON-MELTABLE POLYMER STABILIZERS

In the preparation of stabilizers 1-12, described below, Initiator A was 2,2′-azobis-(isobutyronitrile) and Initiator B was 2,2′-azobis(2,4-dimethyl-valeronitrile).

In the preparation of stabilizers 1-12, described below, total polymerization time was measured from the time at which the initiator was initially charged into the reaction vessel to the time when the polymerization was completed

and heat was withdrawn from the vessel.

a. Preparation of Dispersant Solutions and Dispersants

In the preparation of some of stabilizers 1-12, described below, a dispersant or dispersant solution was used. The dispersants and dispersant solutions were prepared as follows:

Dispersant Solution A

Dispersant Solution A was prepared by polymerizing 198.6 grams of methyl methacrylate and 2.0 grams of glycidyl methacrylate in 1000 ml. of toluene using 0.8 grams of Initiator B. The polymerization temperature was maintained between about 78.1°C and 83.6°C. The total polymerization time was 120 minutes. The resultant dispersant solution contained 13.2% polymer. The resultant polymer in the dispersant solution had an inherent viscosity of 0.066 as measured at a concentration of 0.5 grams of polymer in toluene.

Dispersant Solution B

Dispersant Solution B was prepared by polymerizing 495 grams of methyl methacrylate and 5.0 grams of glycidyl methacrylate in 2000 ml. of toluene using initially 1.2 grams of Initiator A. The polymerization temperature was maintained between about 88°C and 95°C. Additional initiator, in increments of 0.6 grams, was charged into the polymerization vessel approximately every 10-15 minutes until the total amount of Initiator A added was 5.4 grams. The total polymerization time was 172 minutes. The resultant dispersant solution contained 19.04% polymer. The resultant polymer in the dispersant solution had an inherent viscosity of 0.088 as measured at a concentration of 0.5 grams of polymer in toluene.

Dispersant C

Dispersant C was a polyethylene glycol having a molecular weight of 8000.

Dispersant D

Dispersant D was a poly-(oxypropylene)-poly(oxyethylene) glycol block copolymer having an average molecular weight of 13,000.

Dispersant Solution E

Dispersant Solution E was prepared by first charging a reaction vessel with 200 grams of polyethylene glycol having a molecular weight of 8000 and 1200 ml. of toluene. The reaction medium was heated until 200 ml. of toluene was distilled. The reaction medium was then cooled to about 70°C, at which point 10 ml. of methacrylic anhydride and 1 ml. of dodecyl dimethylamine were added. The reaction medium was refluxed for about 2 hours and then cooled before use as a dispersant solution.

b. Preparation of Non-meltable Polymer Stabilizers

Stabilizers 1-12, described below, were all polymerized in a glass reaction vessel equipped with a stirrer, nitrogen inlet above the surface of the liquid, thermometer, and condenser.

For stabilizers 1-12, described below, melting points were determined on a DUPONT Model 9900 DIFFERENTIAL SCANNING CALORIMETER (DSC) in a nitrogen atmosphere. To eliminate the possible effect of small amounts of moisture or solvents, each thermal stabilizer was first heated to 140°C and held there for 10 minutes. The samples were cooled to about 25°C and then heated at a rate of 20°C/minute up to 350°C. The temperature at which endotherms occurred was reported. Also reported was the amount of heat absorbed, in Joules/gram, at each respective endotherm. The major melting point was the temperature at which the greatest amount of heat, in Joules/gram, was absorbed.

For stabilizers 1-12, described below, the melt flow rate was measured at 200°C under a load of 2.16 kilograms according to ASTM-D 1238 method. The stabilizer was redried at 90°C for 12 hours prior to measuring the melt flow rate. The stabilizer polymer was next loaded into the melt indexer and the indexer was kept plugged for 6 minutes while the stabilizer polymer was heated to test temperature. After 6 minutes, the plug was released and the melt flow rate was determined over three minutes intervals. The time intervals reported below were measured from the time the stabilizer was loaded into the melt index.

Regarding the measurement of the melt flow rate, it is known that water and other liquids or low molecular weight solids have substantial effects on melt flow. Depending upon the technique used to isolate the polymer stabilizers in the examples below, dispersant, when used, may be retained with the stabilizer polymer. Prior to measuring the melt flow rate, the dispersant should be removed by washing the stabilizer with a liquid that is a solvent for the dispersant and is a non-solvent for the stabilizer. After washing, the non-meltable polymer stabilizer should be redried prior to testing.

Unless otherwise specified, for stabilizers 1-12, described below, particle size was measured prior to processing with polyacetal by adding about 0.1 grams of the non-meltable polymer stabilizer to about 15 ml. of 2-propanol in a test tube. The tube was shaken by hand and the particle size of the stabilizer in the resultant dispersion was measured on a MICROTRAC II SMALL PARTICLE ANALYZER (ANALYZER), Model 158705/158708, equipped with a 17 channel detector system that covered a particle size range of 0.17 to 60 microns. The ANALYZER printed the percent of particle volume that had a diameter of less than the given detector channel. From the diameter and particle volume, the number average particle size was calculated. In this calculation, the particle diameter for a given detector channel was approximated by the channel diameter. The number of particles in each channel was calculated by the following formula:

$$N = (10000V\%)/(0.5236d^3/6)$$

where

N = number of particles in a given channel
V% = volume of particles in that channel
d = channel diameter

By summing the number of particles in all 17 channels, the total number of particles was calculated. By multiplying the number of particles in a channel by 100, and dividing the result by the total number of particles, the percent of particles in each channel was calculated. To calculate the total number percent having a diameter of less than that channel, starting with the smallest diameter channel, a cumulative number percent was calculated by adding the number percent in all channels that had a diameter less than or equal to that particular channel. From this cumulative sum of number percents, the median number average particle size was calculated. It is this number that is reported as the particle size of stabilizers 1-12, described below.

The major components of stabilizers 1-12, described below are summarized in Table I, which follows the description of the control nylon stabilizer.

Stabilizers 1-2. Polyacrylamide polymer stabilizer prepared with a dispersant solution

Stabilizer 1 was prepared by polymerizing 100 grams of acrylamide and 120 grams of Dispersant Solution A in 800 ml. of 2-propanol. The polymerization reaction was started at about 72°C using an initial charge of 0.04 grams of Initiator A. Additional initiator was added, in increments of 0.04 grams, over the next approximately 185 minutes until the total amount of initiator added was 0.16 grams. Approximately 77 minutes after the initial charge of initiator was added, a solution of 200 grams of acrylamide in 500 ml. of 2-propanol and 25 ml. of water was fed into the reaction vessel over a period of about 72 minutes. Also during that time, an additional 35 ml. of Dispersant Solution A were fed into the reaction vessel. The polymerization temperature was maintained between about 71.7 and 77.0°C. The total polymerization time was about 202 minutes. The resulting polyacrylamide stabilizer dispersion was dried in a 60°C vacuum oven.

Stabilizer 2 was prepared by polymerizing 300 grams of acrylamide and 150 ml. of Dispersant Solution E in 3000 ml. of 2-propanol. The polymerization reaction was started at about 72°C using an initial charge of 0.15 grams of Initiator A. Additional initiator was added, in increments of 0.03 grams, over the next approximately 200 minutes until the total amount of initiator added was 0.45 grams. Approximately 20 minutes after the initial charge of initiator was added, 78 ml. of a solution of 50 ml. of Dispersant Solution E in 100 ml. of methanol solution were fed into the reaction vessel over a period of about 160 minutes. The polymerization temperature was maintained between about 72 and 75.8°C. The total polymerization time was about 240 minutes. The resulting polyacrylamide stabilizer dispersion was filtered to collect the polymer stabilizer. The polymer stabilizer was washed with 2-propanol and then dried in a 60°C vacuum oven.

DSC analysis on the polymer stabilizer showed a small endotherm of 8.3 Joules/gram at 59.6°C. This is due to the melting of the polyethylene glycol dispersant, which, by itself, showed an endotherm of 168.4 Joules/gram at 64.9°C. DSC anaylsis on the polymer stabilizer showed a second endotherm of 8.8 Joules/gram at 178.8°C. The major melting point was 264.0°C, with an endotherm of 217.2 Joules/gram. The melt flow rate, in grams/10 minutes, was as follows: 0.223 at 6-9 minutes; 0.143 at 9-12 minutes; and no flow at 12-15 minutes. The number average particle size was 0.5 microns.

Stabilizers 3-7. Homopolymer stabilizer prepared with a cross-linking monomer and a dispersant solution

Stabilizer 3 was prepared by polymerizing 298.5 grams of acrylamide with 2.13 grams of glycidyl methacrylate and 250 ml. of Dispersant Solution A in 1600 ml. of 2-propanol. The polymerization reaction was started at about 71°C using an initial charge of 0.05 grams of Initiator A. Additional initiator was added in increments of 0.05 and 0.02 grams, over the next approximately 240 minutes until the total amount of initiator added was 0.21 grams. Approximately 55 minutes after the initial charge of initiator was added, a solution of 298.6 grams of acrylamide and 2.13 grams of glycidyl methacrylate in 360 ml. of methanol was fed into the reaction vessel over a period of about 33 minutes. Also, at approximately 55 minutes after the initial charge of initiator was added, an additional 170 ml. of Dispersant Solution A were fed into the reaction vessel over a period of about 48 minutes. The polymerization temperature was maintained between 71 and 80°C. The total polymerization time was about 315 minutes. After the polymerization reaction was complete, about 1000 ml. of heptane were added to the reaction vessel. The resultant polyacrylamide stabilizer dispersion was filtered to collect the polymer stabilizer. The polymer stabilizer was dried at 60°C in a vacuum oven. The dried product was a very fine powder.

DSC analysis on the polymer stabilizer showed a small endotherm of 3.0 Joules/gram at 176.3°C. The major melting point was 282.2°C, with an endotherm of 252.8 Joules/gram. The melt flow rate, in grams/10 minutes, was as follows: no flow at 6-9 minutes. The number average particle size was 0.8 microns.

Stabilizer 4 was prepared by polymerizing 299 grams of methacrylamide, 200 ml. of Dispersant Solution B, and 1.0 gram of N,N′-methylenebisacrylamide in 1600 ml. of 1/1 (v./v.) 2-propanol/toluene. The polymerization reaction was started at about 72°C using an initial charge of 0.1 grams of Initiator A. Additional initiator was added, in increments of 0.05 grams, over the next approximately 200 minutes until the total amount of initiator added was 0.41 grams. Approximately 18 minutes after the initial charge of initiator was added, an additional 45 ml. of Dispersant Solution B were fed into the reaction vessel over a period of about 90 minutes. The polymerization temperature was maintained between about 72 and 76°C. The total polymerization time was about 300 minutes. The resulting polymethacrylamide stabilizer dispersion was filtered in order to isolate the stabilizer polymer. The stabilizer polymer was washed with acetone and dried in a 60°C vacuum oven.

DSC analysis showed that the polymer stabilizer had a major melting point of 289.73°C, with an endotherm of 321.6 Joules/gram. It had no detectable melt flow and it had a number average particle size of 0.8 microns.

Stabilizer 5 was prepared by polymerizing 99.75 grams of acrylamide, 0.25 grams of N,N′-methylenebisacrylamide, and 10 grams of Dispersant C in 500 ml. of 2-propanol. The polymerization reaction was started at about 71°C using 0.04 grams of Initiator A. Additional initiator was added, in increments of 0.02 grams, over the next approximately 158 minutes until the total amount of initiator added was 0.12 grams. Approximately 4 minutes after the initial charge of initiator was added, 25 ml. of a solution of 5 grams of Dispersant C in 50 ml. of methanol solution were added over a period of about 78 minutes. The polymerization temperature was maintained between about 71 and 75°C. The total polymerization time was 203 minutes. After cooling to room temperature, 250 ml. of 2-propanol were added to the reaction vessel. The resulting polyacrylamide stabilizer dispersion was filtered to collect the stabilizer polymer. The stabilizer polymer was dried in a 60°C vacuum oven.

DSC analysis showed a small endotherm of 12.26 Joules/gram at 59.1°C. This is due to the polyethylene glycol, which, by itself, showed a large endotherm of 168.4 Joules/gram at 64.9°C. DSC analysis further showed a small endotherm of 3.2 Joules/gram at 181.2°C. The major melting point was 268.4°C, with an endotherm of 180.7 Joules/gram. The melt flow rate, in grams/10 minutes, was as follows: 0.101 at 6-9 minutes; 0.043 at 9-12 minutes; and no flow at 12-15 minutes. The number average particle size was 1.3 microns.

Stabilizer 6 was prepared by polymerizing 498.75 grams of acrylamide, 1.25 grams of N,N′-methylenebisacrylamide, and 50 grams of Dispersant D in 2500 ml. of 2-propanol. The polymerization reaction was started at about 71°C using an initial charge of 0.15 grams of Initiator A. Additional initiator was added, in increments of 0.03 grams, over the next approximately 130 minutes until the total amount of initiator added was 0.36 grams. Approximately 40 minutes after the initial charge of initiator was added, an additional 50 ml. of 2-propanol were added into the reaction vessel. The same was done at about 63 and 72 minutes. The polymerization temperature was maintained at about 71-79°C. The total polymerization time was about 200 minutes. Next, 1000 ml. of heptane were added to the polymerization vessel. The resulting polyacrylamide stabilizer dispersion was filtered in order to isolate the stabilizer polymer. The stabilizer polymer was dried in a 60°C vacuum oven.

DSC analysis showed that the polymer stabilizer had a small endotherm of 9.7 Joules/gram at 179.6°C. The major melting point was 232.3°C, with an endotherm of 290.1 Joules/gram. The melt flow rate, in grams/10 min. was as follows: no flow after 6-9 minutes. The number average particle size was 1.0 microns.

Stabilizer 7 was prepared by polymerizing 298.5 grams of acrylamide, 1.5 grams of N,N′-methylenebisacrylamide, and 36 grams of Dispersant C in 3000 ml. of 2-propanol. The polymerization reaction was started at about 72.5°C using an initial charge of 0.15 grams of Initiator A. Additional initiator was added, in increments of 0.03 grams, over the next approximately 200 minutes until the total amount of initiator added was 0.45 grams. Approximately 20 minutes

after the initial charge of initiator was added, 91 ml. of a solution of 20 grams of Dispersant C in 100 ml. of methanol solution were fed into the reaction vessel over a period of about 180 minutes. The polymerization temperature was maintained between about 72 and 76°C. The total polymerization time was 240 minutes. The reaction mixture was cooled to 25°C, at which point 250 ml. of 2-propanol were added. The resulting polyacrylamide stabilizer dispersion was filtered in order to isolate the polymer stabilizer. The polymer stabilizer was rinsed with 1000 ml. of 2-propanol and dried in a 60°C vacuum oven.

DSC analysis showed that the polymer stabilizer had a small endotherm of 4.98 Joules/gram at 57.4°C, attributed to polyethylene glycol. DSC analysis further showed a second endotherm of 2.6 Joules/gram at 189.6°C. The major melting point was 291.3°C, with an endotherm of 114.5 Joules/gram. The melt flow rate, in grams/10 min., was as follows: 5.16 at 6-7 minutes, 4.12 at 7-8 minutes, and 4.03 at 8-9 minutes. The stabilizer had a number average particle size of 1.4 microns. This is the stabilizer that was melt processed with polyacetal in Table IV.

The polymer stabilizer was washed with hot methanol to remove the polyethylene glycol dispersant and it was then redried. DSC analysis on the washed polymer stabilizer showed a small endotherm of 2.6 Joules/gram at 187.0°C. The major melting point was 295.0°C, with an endotherm of 209.5 Joules/gram. The washed polymer stabilizer showed no flow at 6-9 minutes. This illustrates that the presence of dispersant may adversely affect melt flow rate measurements. The number average particle size was 1.4 microns.

Stabilizer 8 was prepared by polymerizing 396 grams of acrylamide, 4.0 grams of glycidyl methacrylate, and 200 ml. of Dispersant Solution B in 1800 ml. of 2-propanol. The polymerization reaction was started at about 72°C using an initial charge of 0.1 grams of Initiator A. Additional initiator was added in 0.05 gram increments over the next 191 minutes until the total amount of initiator added was 0.35 grams. Approximately 15 minutes after the initial charge of initiator was added, an additional 40 ml. of Dispersant Solution B was fed into the reaction vessel over a period of about 87 minutes. At approximately 60, 75, 95, and 125 minutes after the initial amount of initiator was charged in the reaction vessel, 50 ml. increments (200 ml. total) of 2-propanol were added to the reaction vessel. The polymerization temperature was maintained between approximately 72 and 77°C. The total polymerization time was 260 minutes. The resultant dispersion was dried in a 70°C vacuum oven.

DSC analysis showed that the polymer stabilizer had a small endotherm of 12 Joules/gram at 178.3°C. The major melting point was 301.2°C, with an endotherm of 166.3 Joules/gram. The melt flow rate, in grams/10 minutes, was as follows: 0.12 at 6-9 minutes; 0.08 at 9-12 minutes; and 0.10 at 12-15 minutes. The number average particle size was 0.9 microns.

Stabilizer 9 was prepared by polymerizing 289.5 grams of acrylamide, 1.5 grams of N,N′-methylenebisacrylamide, and 30 grams of Dispersant C in 3000 ml. of methanol. The polymerization reaction was started at approximately 63°C using an initial charge of 0.15 grams of Initiator A. Another 0.15 grams of Initiator A were added approximately 20 minutes later. Further initiator additions were made in 0.03 gram increments during the next 180 minutes (i.e., 200 minutes after the initial charge of initiator) until a total of 0.49 grams were added. Approximately 20 minutes after the initial initiator addition, 77 ml. of 20 grams of Dispersant C in 100 ml. methanol solution were added over a period of 180 minutes. The polymerization temperature was maintained between 61 and 64°C. The total polymerization time was 240 minutes. The resultant dispersion was cooled to about 25°C. The stabilizer therein was collected by filtration, rinsed once with methanol, and dried in a 60°C vacuum oven.

DSC analysis showed that the polymer stabilizer had a small endotherm of 9.2 Joules/gram at 194.6°C. The major melting point was 306.6°C, with an endotherm of 213.5 Joules/gram. The melt flow rate, in grams/10 minutes, was as follows: no melt flow after 6-9 minutes. The number average particle size was 1.9 microns.

Stabilizer 10. Copolymer stabilizer prepared with a dispersant solution and a cross-linking agent

Stabilizer 10 was prepared by polymerizing 260 grams of acrylamide, 40 grams of hydroxyethyl methacrylate, 1.5 grams of ethylene glycol dimethacrylate, and 200 ml. of Dispersant Solution B in 1200 ml. of 2-propanol and 400 ml. of toluene. The polymerization reaction was started at about 70°C using an initial charge of 0.1 grams of Initiator A. Additional initiator was added, in increments of 0.05 grams, over the next approximately 121 minutes until the total amount of initiator added was 0.3 grams. The polymerization temperature was maintained between 70 and 79°C. The total polymerization time was 205 minutes. The resulting polyacrylamide copolymer stabilizer dispersion was dried in a 70°C vacuum oven.

DSC analysis showed that the polymer stabilizer had a small endotherm of 4.2 Joules/gram at 160.5°C. The major melting point was 287.7°C, with an endotherm of 261.8 Joules/gram. The melt flow rate, in grams/10 min., was as follows: no flow after 6-9 minutes. The number average particle size was 1.4 microns.

Stabilizers 11-12. Control examples - Acrylamide polymerized by conventional solution polymerization methods

Stabilizers 11a and 11b were prepared by polymerizing acrylamide in water according to known methods, such as

those described in Preparative Methods of Polymer Chemistry, by W. E. Sorenson and T. W. Campbell, Interscience Publishers, Inc.:New York (1961), p. 179.

Stabilizer 11a was prepared by charging 207.2 grams of acrylamide, 1658.8 grams of demineralized water, 30.8 grams of 2-propanol, and 0.384 grams of potassium persulfate into a 4 liter flask continually being flushed with about 50 ml./min of carbon dioxide. The reaction solution was stirred and heated, during which time the temperature in the reactor reached 78.2°C. The temperature was then maintained between 77.3°C and 80.0°C for two hours. At the end of the two hours, the reaction solution was a viscous polymer solution. About one-half of the viscous polymer solution was poured into a tray and dried in a 70°C vacuum oven. This was Stabilizer 11a.

Stabilizer 11b was prepared by pouring about 200 ml. of the viscous polymer solution prepared above into about 600 ml. of rapidly stirred 2-propanol. The polymer then precipitated. It was washed three times with 2-propanol and dried in a 70°C vacuum oven. This was Stabilizer 11b. DSC analysis showed it had a small endotherm of 76.13 Joules/gram at 191.8°C. The major melting point was 236.2°C, with an endotherm of 303.2 Joules/gram. The melt flow rate, in grams/10 min., was as follows: no flow at 6-9 minutes.

Both stabilizers were ground in a polymer mill so that the ground products passed through a 20 MESH screen. A 20 MESH screen has openings of 1.44 mm.

Stabilizer 12 was prepared by polymerizing 200.7 grams of acrylamide in 800 ml. of methanol. The polymerization reaction was started at about 54°C using an initial charge of 0.1 gram of Initiator B. Another 0.1 gram of initiator was added about 57 minutes later. As the polymerization reaction proceeded, polymer started to precipitate. To keep the polymer in solution, 800 ml. of water was added to the reaction vessel. The polymerization temperature was maintained between 54.5 and 65°C. The total polymerization time was 150 minutes. The resulting polyacrylamide solution was dried in a 60°C vacuum oven. The product appeared lumpy, was transparent and brittle, and was ground to about 0.5 mm size, as determined by visual inspection, prior to extrusion.

Stabilizer Nylon. Control example

Nylon is a known thermal stabilizer for polyacetal. "Nylon A" was a 33/23/43 nylon terpolymer of nylon 66, nylon 6/10, and nylon 6, respectively. Unless otherwise specified, it was ground prior to compounding with polyacetal. The ground nylon passed through a 20 MESH screen. A 20 MESH screen has openings of 1.44 mm.

**Table I. Major Components of Stabilizers 1-10**

| Stabilizer No. | Monomer/ Comonomer | Dispersant Solution | Solvent in Dispersant Solution | Polymerization Medium | Crosslinking Monomer | Initiator |
|---|---|---|---|---|---|---|
| 1 | AAM | A | toluene | 2-propanol | - | A |
| 2 | AAM | E | toluene | 2-propanol | - | A |
| 3 | AAM | A | toluene | 2-propanol | GMA | A |
| 4 | MAAM | B | toluene | 2-propanol/ toluene | MBAAM | A |
| 5 | AAM | C | - | 2-propanol | MBAAM | A |
| 6 | AAM | D | - | 2-propanol | MBAAM | A |
| 7 | AAM | C | - | 2-propanol | MBAAM | A |
| 8 | AAM | B | toluene | 2-propanol | GMA | A |
| 9 | AAM | C | - | methanol | MBAAM | A |
| 10 | AAM/HEMA | B | toluene | 2-propanol | EGMA | A |
| 11 | AAM | - | - | water | - | A |
| 12 | AAM | - | - | water/ methanol | - | B |

Legend
AAM = acrylamide
MAAM = methacrylamide
HEMA = hydroxyethyl methacrylate
GMA = glycidyl methacrylate
MBAAM = N,N'-methylenebisacrylamide
EGMA = ethylene glycol dimethacrylate

**II. SYNTHESIZED NON-MELTABLE POLYMER STABILIZERS MELT COMPOUNDED IN POLYACETAL**

Stabilizers 1-12, synthesized as described above, were melt compounded with polyacetal homopolymer or copolymer and, unless otherwise stated, 0.1% hindered phenol antioxidant. Nylon A was also melt compounded with polyacetal polymer as a control example. Unless stated otherwise, the ingredients were compounded on a 5.08 cm. single

screw extruder. The temperature of the melt as it exited the extruder was approximately 200°C.

The antioxidant used during the extrusion was one of the following:

(1) Antioxidant A = tetrakis(methylene(3,5-di-tert-butyl-4-hydroxyhydrocinnamate))methane;
(2) Antioxidant B = triethyleneglycol bis(3-(3′-tert-butyl-4′hydroxy-5′-methylphenyl)propionate).

The polyacetal used in the melt compounding and the extrusion was one of the following

(1) Polyacetal A = acetate capped polyoxymethylene homopolymer of about 65,000 number average molecular weight, having a melt flow rate, in grams/10 minutes, as follows: 2.58 at 6-9 minutes; 2.60 at 9-12 minutes; and 2.67 at 12-15 minutes;
(2) Polyacetal B = acetate capped polyoxymethylene homopolymer of about 45,000 number average molecular weight, having a melt flow rate, in grams/10 minutes, as follows: 16.60 at 6-8 minutes and 16.47 at 8-10 minutes;
(3) Polyacetal C = acetate capped polyoxymethylene homopolymer of about 30,000 number average molecular weight, having a melt flow rate, in grams/10 minutes, as follows: 20.40 at 6-7 minutes; 20.33 at 7-8 minutes; and 22.58 at 8-9 minutes;
(4) Polyacetal D - acetal copolymer extracted, using methanol, from Celcon® M90-01 flake acetal copolymer, having a melt flow rate, in grams/10 minutes, as follows: 9.1 at 6-9 minutes; 11.2 at 9-12 minutes; and 10.1 at 12-15 minutes.

Melt flow rates were determined by the same procedure previously described.

The thermal stability of the polyacetal compositions containing the non-meltable polymeric stabilizer, as well as the thermal stability of the control compositions, was determined using a thermally evolved formaldehyde (TEF) test procedure. A weighed sample of the polyacetal composition was placed in a tube and the tube was fitted with a cap for introduction of nitrogen to the test sample for removal of any evolved gases from the apparatus while maintaining the sample in an oxygen-free environment. The tube that contained the sample was heated at 250°C in a silicone oil bath. The nitrogen and any evolved gases transported thereby were bubbled through 75 ml of a 40 g/liter sodium sulfite in water solution. Any evolved formaldehyde reacts with the sodium sulfite to liberate sodium hydroxide. The sodium hydroxide was continuously neutralized with standard 0.1 N HCl. The results were obtained as a chart of ml of titer versus test time. The percent evolved formaldehyde was calculated by the formula

$$(V)\ (N)\ \frac{0.03 \times 100}{SW}$$

where

V = the volume of titer in milliliters
N = the normality of the titer, and
SW = the sample weight in grams.

The factor "0.03" is the milliequivalent weight of formaldehyde in g/milliequivalent. Thermal evolved formaldehyde results are conveniently reported after fifteen minutes and after thirty minutes heating. In some examples, it is reported on hourly increments up to and including 6 hours.

Also reported, where available, is the color of the composition after 60 minutes in the TEF test. The color was determined by visual inspection.

Particle size was determined from pellets of the polyacetal melt processed with the polymer stabilizer. Specifically, the pellet was sectioned using a Reichert-Jung Ultracut E model FC4E diamond knife microtome. Using standard -90°C cryo-ultramicrotomy techniques, 90-120 nanometer sections of each sample were microtomed. The microtomed sections, still on the diamond blade, were picked off the diamond blade and mounted directly onto a copper transmission electron microscopy (TEM) grid. The sections, as mounted, were placed in a Denton vacuum evaporator model D V-502 and, under high vacuum, coated with a thin layer of spectroscopically pure carbon less than 20 nanometers thick. The carbon coating gives acetal sections more stability when exposed to the electron beam inside the transmission electron microscope. The carbon coated sections on the TEM grids were then examined using a Zeiss EM10CR transmission electron microscope. Images were recorded at nominal magnifications of 1000x, 2520x, and 5000x on 70 mm (Kodak 5302), developed in Dektol, and printed. Magnification calibrations performed on an annual basis using a commercially available grating replica were combined with the photographic enlargement factor to give the final image magnification, which included 4640x, 11800x, and 23000x. The number average particle size was determined from the recorded images by measuring, with a ruler, the diameter of at least 50 particles, including large particles and any particles that may have agglomerated. Agglomerated particles were treated as one particle. The number average particle size was calculated by averaging the values obtained from the at least 50 particles.

EXAMPLES 1-29. NON-MELTABLE POLYMER STABILIZER IN POLYACETAL

TEF test results for Polyacetal B alone and Polyacetal B with a varying concentration of nylon A are reported in Tables IIA-IIC, below, under Control Examples 1-6. The particular nylon control reported in each Table was the control that was run simultaneously with most, if not all, of the examples reported in the particular Table.

TEF test results for Polyacetal B plus the non-meltable polymer stabilizers of the present invention are reported in Tables IIA-IIC, below, under Examples 1-29. The non-meltable polymer stabilizers of the present invention significantly improved the thermal stability of polyacetal. Further, better thermal stability was achieved, on average, with the non-meltable polymer stabilizers of the present invention than with the conventional nylon stabilizer, particularly at longer test times. The color of the compositions at 60 minutes was light tan with the stabilizers of the present invention and it was dark brown with the conventional nylon stabilizer. Finally, significantly better thermal stability was achieved with polyacrylamide stabilizers of the present invention, which had a small average particle size prior to compounding, than with polyacrylamide stabilizers that had a large average particle size (i.e., Control Examples 3a, 3b, and 4) prior to compounding.

Transmission electron microscopy showed the number average particle size of the polymer stabilizers of Examples 19 and 20 to be 1.0 and 0.8, respectively. In determining the number average particle size for the stabilizers processed in the polyacetal, agglomerates were treated as one particle.

**Table IIA. Thermal Stability Results for Polyacetal B**

| Example No. | Polyacetal | Thermal Stabilizer | Thermal Stabilizer Wt % | Antioxidant | TEF - % Formaldehyde 15 min | 30 min | 60 min |
|---|---|---|---|---|---|---|---|
| Control 1 | B | - | - | A | 1.54 | 2.74 | - |
| Control 2a | B | Nylon A | 0.4 | A | 0.06 | 0.37 | 1.83 |
| Control 2b | B | Nylon A | 0.6 | A | 0.07 | 0.35 | 2.25 |
| Control 2c | B | Nylon A | 0.75 | A | 0.11 | 0.49 | - |
| Control 2d | B | Nylon A | 0.8 | A | 0.09 | 0.35 | 2.31 |
| Control 2e | B | Nylon A(iv) | 0.8 | B(v) | 0.09 | 0.38 | - |
| Control 3a | B | 11a | 0.5 | B(v) | 2.39 | 6.86 | - |
| Control 3b | B | 11b | 0.5 | B(v) | 1.31 | 4.65 | - |
| Control 4(i) | B | 12 | 0.48 | A | 0.93 | 4.20 | - |
| 1(ii) | B | 1 | 0.2 | A | 0.08 | 0.36 | 0.83 |
| 2 | B | 1 | 0.3 | A | 0.04 | 0.23 | 0.71 |
| 3 | B | 1 | 0.4 | A | 0.03 | 0.20 | 0.56 |
| 4 | B | 1 | 0.5 | A | 0.03 | 0.18 | 0.58 |
| 5 | B | 1 | 0.6 | A | 0.04 | 0.48 | 0.74 |
| 6 | B | 1 | 0.7 | A | 0.05 | 0.25 | 0.78 |
| 7 | B | 1 | 0.9 | A | 0.02 | 0.15 | 0.61 |
| 8 | B | 3 | 0.2 | A | 0.04 | 0.22 | 0.61 |
| 9 | B | 3 | 0.3 | A | 0.04 | 0.24 | 0.66 |
| 10 | B | 3 | 0.4 | A | 0.03 | 0.20 | 0.62 |
| 11 | B | 3 | 0.5 | A | 0.05 | 0.22 | 0.55 |
| 12 | B | 3 | 0.6 | A | 0.03 | 0.17 | 0.53 |
| 13 | B | 3 | 0.7 | A | 0.07 | 0.28 | 1.02 |
| 14 | B | 3 | 0.9 | A | 0.02 | 0.15 | 0.52 |
| 15 | B | 4 | 0.55 | B | 0.18 | 0.55 | - |
| 16 | B | 5 | 0.50 | A | 0.04 | 0.23 | - |
| 17(iii) | B | 6 | 0.625 | A | 0.10 | 0.45 | - |
| 18 | B | 10 | 0.55 | B | 0.04 | 0.18 | - |
| 19 | B | 8 | 0.5 | B(v) | 0.01 | 0.05 | - |
| 20 | B | 9 | 0.5 | B(v) | 0.03 | 0.22 | - |

**Legend**

(i) The extruded strand contained lumps of undispersed polyacrylamide

(ii) The stabilizer particle size in the extruded pellets was about 0.5 microns, as determined by Transmission Electron Microscopy

(iii) The extrusion was carried out on a 2.54 cm. diameter single screw extruder

(iv) Particle size was approximately 5 mm., as determined by visual inspection

(v) 0.2 wt% added

Table IIB. Thermal Stability Results for Polyacetal B

| Example No. | Polyacetal | Thermal Stabilizer | Thermal Stabilizer Wt % | Antioxidant | TEF - % Formaldehyde 15 min | 30 min |
|---|---|---|---|---|---|---|
| Control 1 | B | - | - | A | 1.54 | 2.74 |
| Control 5 | B | Nylon A | 0.8 | A | 0.02 | 0.23 |
| 21 | B | 1 | 0.25 | A | 0.03 | 0.17 |
| 22 | B | 1 | 0.35 | A | 0.05 | 0.18 |
| 23 | B | 1 | 0.45 | A | 0.04 | 0.15 |
| 24 | B | 3 | 0.25 | A | 0.02 | 0.12 |
| 25 | B | 3 | 0.35 | A | 0.02 | 0.10 |
| 26 | B | 3 | 0.45 | A | 0.01 | 0.10 |

**Table IIC. Thermal Stability Results for Polyacetal B**

| Example No. | Polyacetal | Thermal Stabilizer | Thermal Stabilizer Wt % | Antioxidant | TEF - % Formaldehyde 15 min | TEF - % Formaldehyde 30 min |
|---|---|---|---|---|---|---|
| Control 1 | B | - | - | A | 1.54 | 2.74 |
| Control 6 | B | Nylon A | 0.79 | B(i) | 0.13 | 0.47 |
| 27 | B | 2 | 0.30 | B(i) | 0.10 | 0.36 |
| 28 | B | 2 | 0.40 | B(i) | 0.07 | 0.33 |
| 29 | B | 2 | 0.50 | B(i) | 0.05 | 0.28 |

Legend
(i) 0.2 wt% added

EXAMPLES 30-38. NON-MELTABLE POLYMER STABILIZER IN POLYACETAL

TEF test results for Polyacetal A and Polyacetal C with nylon A are reported in Table III, below, under Control Examples 7-8.

TEF test results for Polyacetal A and Polyacetal C containing the non-meltable polymer stabilizers of the present

invention are reported in Table III, below, under Examples 30-38. At the 30 minute test time, the non-meltable polymer stabilizers of the present invention imparted better thermal stability, at a lesser concentration, to the polyacetal resin than did the conventional nylon stabilizer.

Table III. Thermal stability Results for Polyacetals A and C

| Example No. | Polyacetal | Thermal Stabilizer | Thermal Stabilizer Wt % | Antioxidant | TEF - % Formaldehyde 15 min | TEF - % Formaldehyde 30 min |
|---|---|---|---|---|---|---|
| Control 7 | A | Nylon A | 0.65 | A | 0.02 | 0.12 |
| Control 8 | C | Nylon A | 0.8 | A | 0.07 | 0.30 |
| 30 | A | 1 | 0.25 | A | 0.01 | 0.07 |
| 31 | A | 1 | 0.35 | A | 0.01 | 0.04 |
| 32 | A | 1 | 0.45 | A | 0.03 | 0.06 |
| 33 | A | 3 | 0.25 | A | 0.03 | 0.10 |
| 34 | A | 3 | 0.35 | A | 0.01 | 0.05 |
| 35 | A | 3 | 0.45 | A | 0.01 | 0.05 |
| 36 | C | 3 | 0.25 | A | 0.03 | 0.13 |
| 37 | C | 3 | 0.35 | A | 0.03 | 0.13 |
| 38 | C | 3 | 0.45 | A | 0.03 | 0.14 |

EXAMPLE 39. NON-MELTABLE POLYMER STABILIZER IN POLYACETAL COPOLYMER

TEF test results for Polyacetal D (polyacetal copolymer) without thermal stabilizer are reported in Table IV, below, under Control Example 9. TEF test results for Polyacetal D with the non-meltable polymer stabilizer of the present invention are reported in Table IV, below, under Example 39. The thermal stability of the polyacetal was significantly improved with the non-meltable polymer stabilizer of the present invention.

**Table IV. Thermal Stability Results for Acetal Copolymer**

| Example No. | Polyacetal | Thermal Stabilizer | Thermal Stabilizer Wt % | Antioxidant | TEF - % Formaldehyde 15 min | 30 min |
|---|---|---|---|---|---|---|
| Control 9 | D | - | - | A | 0.12 | 0.48 |
| 39 | D | 7 | 0.50 | A | 0.00 | 0.01 |

EXAMPLES 40-42. NON-MELTABLE POLYMER STABILIZER IN POLYACETAL

In examples 40-42, described in Table V, below, the TEF test was run for 6 hours and TEF values were obtained at every hour during that time period. In example 40, nylon A was the thermal stabilizer for polyacetal. Example 41,

wherein polyacetal homopolymer was stabilized, and example 42, wherein polyacetal copolymer was stabilized, show that the long term thermal stability of polyacetal was significantly improved, in comparison to the thermal stability achieved with a conventional nylon stabilizer, when there was used a non-meltable polymer stabilizer of the present invention.

Table V. Long Term Thermal Stability Test Results

| Example No. | Polyacetal | Thermal Stabilizer | Thermal Stabilizer Wt. % | Anti-oxidant | TEF - % Formaldehyde 1 hr | 2 hrs | 3 hrs | 4 hrs | 5 hrs | 6 hrs |
|---|---|---|---|---|---|---|---|---|---|---|
| 40 | B | Nylon A | 0.60 | A | 2.48 | 12.35 | 18.96 | 23.52 | 27.00 | 29.94 |
| 41 | B | 3 | 0.35 | A | 0.37 | 0.82 | 1.27 | 1.77 | 2.33 | 2.90 |
| 42 | D | 7 | 0.50 | A | 0.06 | 0.21 | 0.33 | 0.47 | 0.63 | 0.81 |

## III. MICROCRYSTALLINE OR FIBROUS CELLULOSE STABILIZERS IN POLYACETAL

In the following examples, either microcrystalline or fibrous cellulose, both of which are derived from naturally occurring cellulose, was used as a stabilizer for polyacetal.

The polyacetal polymer used in the examples below was one of the following:

(1) POLYACETAL "E" - an acetate end-capped homopolymer having a number average molecular weight of about 40,000 and
(2) POLYACETAL "F" - an acetate end-capped homopolymer having a number average molecular weight of about 33,000.

The microcrystalline cellulose stabilizer used in the examples below was one of the following:

(1) "MC11" was a commercially available microcrystalline cellulose that was air jet milled to an average particle size of about 11 microns,
(2) "MC20" was a commercially available microcrystalline cellulose having an average particle size of about 20 microns,
(3) "MC50" was a commercially available microcrystalline cellulose having an average particle size of about 50 microns, and
(4) "MC100" was a commercially available microcrystalline cellulose having an average particle size of about 100 microns.

The average level-off degree of polymerization for each microcrystalline cellulose used in the examples below ranged from 190 to 200. Each microcrystalline cellulose used in the examples below had less than 10 ppm heavy metals and less than 0.05% ash. The pH of a 10% aqueous suspension of each microcrystalline cellulose used in the examples below ranged from about 5.5-7.

The fibrous cellulose used in the examples below was one of the following:

(1) "FC1" was a commercially available fibrous cellulose having an average fiber length of less than 22 microns and an ash content of about 0.20% to 0.25% ash.
(2) "FC2" was a commercially available fibrous cellulose having an average fiber length of less than 90 microns, an ash content of about 0.15%, and a pH, measured on both 5% and 10% aqueous suspensions of cellulose, of 5.2, and
(3) "FC3" was a commercially available fibrous cellulose having an average fiber length of about 300 microns, as ash content of about 0.16%, and a pH, measured on a 5% aqueous suspension of cellulose of 5.95.

Stabilizers other than the above cellulose stabilizers that were used in the examples that follow were:

(1) "Nylon B" was a 33/23/43 terpolymer of nylon 66, nylon 6/10 and nylon 6, respectively and
(2) "EVOH" was ethylene/vinyl alcohol copolymer containing 29 weight percent ethylene and 71 weight percent vinyl alcohol, and having an apparent melt viscosity at 210°C of 9500 P, which had been purified such that it contained less than 10 ppm ash.

The antioxidant used in the examples that follow was one of the following:

(1) "antioxidant B" was triethyleneglycol bis(3-(3′-tert-butyl-4′-hydroxy-5′-methylpenthyl)proprionate) and
(2) "antioxidant C" was N,N′-hexamethylene bis(3,5-di-tert-butyl-4-hydroxyhydrocinnamide).

In the following examples, thermal stability of the compositions was determined using a thermally evolved formaldehyde (TEF) test procedure, as described previously, except that in some instances, testing was conducted at 259°C. Thermally evolved formaldehyde results are reported in the data tables below under columns headed with "Wt % $CH_2O$ at x °C". The time period for which the sample was heated is also indicated in said data tables. The results obtained at the longer heating times are especially revealing of the improved long term stability of the compositions of the present invention.

EXAMPLES 43-55. EFFECT OF MICROCRYSTALLINE OR FIBROUS CELLULOSE ON THE THERMAL STABILITY OF POLYACETAL FLUFF

The components of Examples 43-55 and Control Examples C10-C11 are listed in Table VI, below. For each example, powdered microcrystalline cellulose or powdered fibrous cellulose stabilizer was added to polyacetal fluff, shaken to mix, and tested for thermally evolved formaldehyde ($CH_2O$) as described above. The results are reported in Table VI, below. It is evident from the results that both the microcrystalline cellulose and the fibrous cellulose acted to improve the stability of the polyacetal.

TABLE VI.

| EFFECT OF MICROCRYSTALLINE OR FIBROUS CELLULOSE IN POLYACETAL FLUFF | | | | | |
|---|---|---|---|---|---|
| Eg. No. | Wt. % PAc | Wt. % Stabilizer | Wt. % $CH_2O$ @ 250°C | | |
| | | | 15 min | 30 min | 60 min |
| C10 | 100 E | - | 0.26 | 1.08 | 2.16 |
| 43 | 99.8E | 0.2 MC20 | 0.29 | 0.69 | 1.12 |
| 44 | 99.5E | 0.5 MC20 | 0.15 | 0.42 | 0.77 |
| 45 | 99.0E | 1.0 MC20 | 0.11 | 0.36 | 0.69 |
| 46 | 98.0E | 2.0 MC20 | 0.09 | 0.38 | 0.85 |
| 47 | 95.0E | 5.0 MC20 | 0.09 | 0.64 | 1.17 |
| C11 | 100 F | - | 0.72 | 1.02 | 2.08 |
| 48 | 99.75F | 0.25MC20 | 0.38 | 0.28 | 0.68 |
| 49 | 99.5F | 0.5 MC20 | 0.24 | 0.32 | 0.52 |
| 50 | 99.0F | 1.0 MC20 | 0.24 | 0.26 | 0.54 |
| 51 | 98.0F | 2.0 MC20 | 0.20 | 0.43 | 0.54 |
| 52 | 99.75F | 0.25 FCI | 0.38 | 0.64 | 0.92 |
| 53 | 99.5 F | 0.50 FCI | 0.34 | 0.63 | 0.96 |
| 54 | 99.0 F | 1.0 FCI | 0.35 | 2.22 | 1.34 |
| 55 | 98.0 F | 2.0 FCI | 0.30 | 1.24 | 1.70 |
| PAc = polyacetal | | | | | |

EXAMPLES 56-61. EFFECT OF MICROCRYSTALLINE CELLULOSE ON THE THERMAL STABILITY OF POLYACETAL (melt processed)

The components of Examples 56-61 and Control Examples C12-C15 are listed in Table VIIA and Table VIIB, below. For each example, the components were mixed together and melt compounded on a 28 mm Werner and Pfleiderer twin screw extruder with barrel temperature settings of 150°C to 180°C, die temperature setting of 200°C and screw speed of 150 rpm. The temperature of the melt as it exited the die for the examples ranged from 221°C to 224°C. The melt compounded sample was tested by the TEF test, described above. The results, as reported below in Table VIIA and Table VIIB, showed that the microcrystalline cellulose stabilizer imparted better thermal stability, on average, to polyacetal than did the conventional stabilizers at longer test times.

TABLE VIIA.

| EFFECT OF MICROCRYSTALLINE CELLULOSE IN MELT PROCESSED POLYACETAL | | | | | | | | |
|---|---|---|---|---|---|---|---|---|
| Eg. No. | Wt % PAc | Wt % Stab. | Wt % AO | Wt % $CH_2O$ @ 250°C | | | | |
| | | | | 15 min | 30 min | 60 min | 120 min | 180 min |
| 56 | 99.4E | 0.5MC20 | 0.1B | 0.15 | 0.60 | 1.21 | 2.19 | 3.08 |
| 57 | 99.4E | 0.5MC20 | 0.1C | 0.18 | 0.55 | 1.09 | 1.95 | - |
| C12 | 98.9E | 1.0EVOM | 0.1C | 0.20 | 0.78 | 1.96 | 4.60 | 6.84 |
| C13 | 98.9E | 1.0nylon B | 0.1B | 0.11 | 0.60 | 3.40 | 14.00 | 21.08 |

Continuation of the Table on the next page

TABLE VIIA. (continued)

| EFFECT OF MICROCRYSTALLINE CELLULOSE IN MELT PROCESSED POLYACETAL | | | | | | | | |
|---|---|---|---|---|---|---|---|---|
| Eg. No. | Wt % PAc | Wt % Stab. | Wt % AO | Wt % $CH_2O$ @ 250°C | | | | |
| | | | | 15 min | 30 min | 60 min | 120 min | 180 min |
| PAc = Polyacetal<br>Stab. = Stabilizer | | | | | | | | |

TABLE VIIB.

| EFFECT OF MICROCRYSTALLINE CELLULOSE IN MELT PROCESSED POLYACETAL | | | | | |
|---|---|---|---|---|---|
| Eg. No. | WT % PAc | WT % Stabilizer | WT % AO | WT % $CH_2O$ @ 259°C | |
| | | | | 15 min | 30 min |
| 58 | 98.9E | 1.0 MC11 | 0.1B | 0.15 | 0.63 |
| 59 | 99.65E | 0.25 MC11 | 0.1B | 0.21 | 0.74 |
| 60 | 99.4E | 0.5 MC11 | 0.1B | 0.27 | 0.87 |
| 61 | 99.4E | 0.5 MC20 | 0.1B | 0.20 | 0.66 |
| C14 | 99.7E | 0.2 EVOH | 0.1B | 0.18 | 0.99 |
| C15 | 98.9E | 1.0 EVOH | 0.1B | 0.07 | 0.52 |
| PAc = Polyacetal | | | | | |

EXAMPLE 62 & C17. EFFECT OF FIBROUS CELLULOSE ON THE THERMAL STABILITY OF POLYACETAL (melt processed)

The components of Example 62 and Control Examples C16-C17 are listed in TABLE VIII, below. For each example, the components were mixed together, melt compounded, and extruded under the same conditions as for examples 56-61. Each sample was subjected to the TEF test, described above.

The results are reported in TABLE VIII, below. Control Example C17 shows the type of results obtained when an impure fibrous cellulose (pH less than 5.5) was added to the polyacetal.

TABLE VIII.

| EFFECT OF FIBROUS CELLULOSE IN MELT PROCESSED POLYACETAL | | | | | |
|---|---|---|---|---|---|
| Eg. No. | Wt % PAc | Wt % Stabilizer | Wt % AO | Wt % $CH_2O$ @ 259°C | |
| | | | | 15 min | 30 min |
| 62 | 94.90F | 5.0 FC3 | 0.095C | 0.03 | 0.27 |
| C16 | 99.1 F | 0.8 EVOH | 0.1 C | 0.06 | 0.47 |
| C17 | 94.90F | 5.0 FC2 | 0.095C | 0.68 | 3.49 |
| PAc = polyacetal | | | | | |

EXAMPLES 63-68. POLYACETAL WITH MICROCRYSTALLINE CELLULOSE OF VARYING PARTICLE SIZE

The components of Examples 63-68 and Control Example C18 are listed in Tables IXA and IXB, below. The components were mixed together and melt compounded as described for Examples 56-61. Each sample was subjected to the TEF test, described above.

The results for Examples 63-65 are reported in Table IXA, below. The results showed that as the average particle size of the microcrystalline cellulose decreased, the thermal stability of the polyacetal composition increased.

The results for Examples 66-68 are reported in Table IXB, below. For these examples, TEF values were obtained at test times longer than 30 minutes. The results showed again that the smaller the average particle size of the microcrystalline cellulose, the better the thermal stability of the polyacetal.

TABLE IXA. POLYACETAL WITH MICROCRYSTALLINE CELLULOSE OF VARYING PARTICLE SIZE

| Eg. No. | Wt % PAc | Wt % Microcrystalline Cellulose | Microcrystalline Cellulose Average Particle Size (Microns) | Wt % AO | Wt % $CH_2O$ @ 259°C 15 min | Wt % $CH_2O$ @ 259°C 30 min |
|---|---|---|---|---|---|---|
| 63 | 99.4E | 0.5 MC100 | 100 | 0.1A | 0.26 | 1.20 |
| 64 | 99.4E | 0.5 MC50 | 50 | 0.1A | 0.32 | 1.07 |
| 65 | 99.4E | 0.5 MC20 | 20 | 0.1A | 0.13 | 0.53 |

PAc = polyacetal

TABLE IXB. POLYACETAL WITH MICROCRYSTALLINE CELLULOSE AT VARYING AVERAGE PARTICLE SIZE

| Eg. No. | Wt % PAc | Wt % Stabilizer | Microcrystalline Cellulose Average Particle Size (microns) | Wt % AO | Wt % $CH_2O$ @ 250°C 15 min | 30 min | 60 min | 90 min | 120 min |
|---|---|---|---|---|---|---|---|---|---|
| 66 | 99.4E | 0.5 MC100 | 100 | 0.1B | 0.18 | 0.86 | 2.24 | 3.32 | 4.57 |
| 67 | 99.4E | 0.5 MC50 | 50 | 0.1B | 0.19 | 0.63 | 1.11 | 1.50 | 1.86 |
| 68 | 99.4E | 0.5 MC20 | 20 | 0.1B | 0.18 | 0.55 | 1.09 | 1.54 | 1.95 |
| C18 | 99.15E | 0.75 EVOH | - | 0.1B | 0.11 | 1.98 | 2.86 | 3.67 | 4.61 |

PAc = polyacetal

## Claims

1. A thermoplastic polyacetal composition consisting essentially of

(a) 0.05-3 weight percent of at least polymer which does not melt at the processing temperature of the polyacetal (b) or which has a melt flow rate measured according to ASTM-D1238 of less than one-tenth of the melt flow rate of the polyacetal (b) and which is selected from the group consisting of polymers containing formaldehyde reactive hydroxyl groups, polymers containing formaldehyde reactive nitrogen groups, and polymers containing both formaldehyde reactive hydroxyl groups and formaldehyde reactive nitrogen groups, provided that the atoms in the backbone of the polymer to which the formaldehyde reactive groups are attached, directly or indirectly, are separated from each other, on average, by not more than twenty chain atoms, and further provided that the amount of the formaldehyde reactive nitrogen groups attached, directly or indirectly, to the atoms which are in the backbone of the polymer is at least three times as great as the amount of formaldehyde reactive nitrogen groups present in the backbone of the polymer, the formaldehyde reactive nitrogen groups being comprised of a nitrogen atom having one or two hydrogen atoms attached thereto,

(b) 97-99.95 weight percent of at least one polyacetal polymer,

provided that the above-stated percentages are based on the total amount of components (a) and (b) only and further provided that the polymer of component (a) has a number average particle size in the composition of less than 10 microns.

2. A thermoplastic polyacetal composition consisting essentially of

(a) 0.05 to 5 weight percent of a stabilizer selected from the group consisting of microcrystalline cellulose and fibrous cellulose, and
(b) 95 to 99.95 weight percent of polyacetal polymer,

provided that the above-stated percentages are based on the total amount of components (a) and (b) only and wherein the average particle size of the microcrystalline cellulose is 100 microns or less.

3. The composition of Claims 1 or 2 wherein the polyacetal is homopolymer and the polymer of component (a) is substantially free of acidic materials and basic materials.

4. The composition of Claim 1 wherein the polymer of component (a) comprises 0.15-1.5, preferably 0.2-1.0 weight percent of the composition.

5. The composition of Claim 1 wherein the number average particle size of the polymer of component (a) in the composition is less than 5 microns, preferably less than 2 microns.

6. The composition of Claim 1 wherein the polymer of component (a) is characterized as having its major melting point higher than the temperature at which the polyacetal is melt processed.

7. The composition of Claim 1 wherein the polymer of component (a) is characterized as having a melt flow rate substantially less than that of the polyacetal, preferably less than one-tenth that of the polyacetal, said melt flow rate being determined at the temperature at which the polyacetal is melt processed.

8. The composition of Claim 1 wherein the ratio of the formaldehyde reactive groups to carbon atoms in the backbone of the polymer of component (a) is in the range of 1:1-1:20, preferably 1:2-1:10, especially preferred 1:2-1:5.

9. The composition of Claim 1 wherein the amount of formaldehyde reactive nitrogen groups attached, directly or indirectly, to the atoms which are in the backbone of the polymer of component (a) is at least ten times greater, preferably substantially greater than the amount of said groups present in the backbone of the polymer of component (a).

10. The composition of Claim 1 wherein the polymer of component (a) is a polymer containing formaldehyde reactive nitrogen groups.

**11.** The composition of Claim 1 wherein the polymer of component (a) is a polymer containing both formaldehyde reactive nitrogen groups and formaldehyde reactive hydroxyl groups.

**12.** The composition of Claim 10 wherein the polymer containing formaldehyde reactive nitrogen groups is polyacrylamide or polymethacrylamide.

**13.** The composition of Claim 10 wherein the polymer containing formaldehyde reactive nitrogen groups is polyacrylamide wherein at least 90 mole percent of the repeat units are of the form

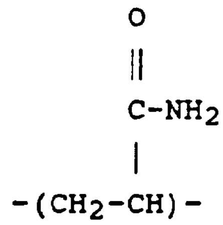

**14.** The composition of Claim 1 wherein the polymer of component (a) is characterized as having its major melting point higher than the temperature at which the polyacetal is melt processed and wherein the polymer of component (a) is polyacrylamide having at least 90 mole percent of its repeat units of the form

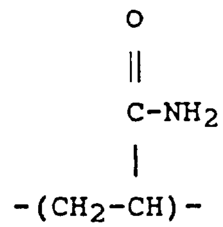

**15.** The composition of Claim 1 wherein the polymer of component (a) is a copolymer of hydroxypropyl methacrylate and a comonomer selected from the group consisting of acrylamide, methacrylamide, or dimethylaminoethyl methacrylate.

**16.** The composition of Claim 1 wherein the polymer of component (a) is a hydroxypropyl methacrylate/acrylamide copolymer.

**17.** The composition of Claim 2 wherein component (a) comprises 0.05 to 1 weight percent of the composition.

**18.** The composition of Claim 2 wherein the component (a) stabilizer is microcrystalline cellulose.

**19.** The composition of Claim 18 wherein the average particle size of the microcrystalline cellulose is 50 microns or less, preferably 25 microns or less and especially preferred about 10 microns or less.

**20.** The composition of Claim 18 wherein the microcrystalline cellulose has a level-off degree of polymerization of 125 to 375, preferably 175 to 225 anhydroglucose units.

**21.** The composition of Claim 2 wherein the component (a) stabilizer is fibrous cellulose

**22.** The composition of Claims 1 or 2 wherein the polyacetal polymer is a copolymer.

**23.** The composition of Claims 1 or 2 wherein the polyacetal has a number average molecular weight of 10,000-100,000.

**24.** The composition of Claims 1 or 2 further comprising at least one of co-stabilizers, antioxidants, pigments, colorants, reinforcing agents, UV stabilizers, hindered amine stabilizers, glass fibers, lubricants nucleating agents, toughening agents, and fillers.

**25.** Shaped articles made from the composition of Claims 1 or 2.

26. A method of preparing the composition of Claims 1 or 2, comprising mixing the component (a) with the component (b) polyacetal polymer at a temperature above the melting point of the component (b) polyacetal polymer and below the temperature at which degradation of the components will occur.

**Patentansprüche**

1. Thermoplastische Polyacetalzusammensetzung, bestehend im wesentlichen aus

(a) 0,05 bis 3 Gew.-% wenigstens eines Polymeren, welches bei der Verarbeitungstemperatur des Polyacetals (b) nicht schmilzt, oder welches eine Schmelzflußgeschwindigkeit, gemessen gemäß ASTM-D 1238, von weniger als einem Zehntel der Schmelzflußgeschwindigkeit des Polyacetals (b) aufweist, und welches ausgewählt ist aus der Gruppe bestehend aus Polymeren, die formaldehydreaktive Hydroxylgrupppen enthalten, Polymeren, die formalaldehydreaktive Stickstoffgruppen enthalten, und Polymeren, die sowohl formaldehydreaktive Hydroxylgruppen als auch formaldehydreaktive Stickstoffgruppen enthalten, mit der Maßgabe, daß die Atome im Grundgerüst des Polymeren, an welchen die formaldehydreaktiven Gruppen hängen, direkt oder indirekt im Durchschnitt durch nicht mehr als zwanzig Kettenatome voneinander getrennt sind, und mit der weiteren Maßgabe, daß die Menge der formaldehydreaktiven Stickstoffgruppen, die direkt oder indirekt an den Atomen im Grundgerüst des Polymeren hängen, wenigstens dreimal so groß ist wie die Menge an formaldehydreaktiven Stickstoffgruppen, die im Grundgerüst des Polymeren vorhanden sind, wobei die formaldehydreaktiven Stickstoffgruppen aus einem Stickstoffatom mit ein oder zwei anhängenden Wasserstoffatomen bestehen,
(b) 97 bis 99,95 Gew.-% wenigstens eines Polyacetalpolymeren,

mit der Maßgabe, daß die oben angegebenen Prozentwerte nur auf die Gesamtmenge der Komponenten (a) und (b) bezogen sind, und mit der weiteren Maßgabe, daß das Polymere der Komponente (a) eine zahlendurchschnittliche Teilchengröße in der Zusammensetzung von weniger als 10 µm aufweist.

2. Thermoplastische Polyacetalzusammensetzung, bestehend im wesentlichen aus

(a) 0,05 bis 5 Gew.-% eines Stabilisators, ausgewählt aus der Gruppe bestehend aus mikrokristalliner Zellulose und faserförmiger Zellulose, und
(b) 95 bis 99,95 Gew.-% Polyacetalpolymerem,

mit der Maßgabe, daß die oben angegebenen Prozentwerte nur auf die Gesamtmenge der Komponenten (a) und (b) bezogen sind, und wobei die durchschnittliche Teilchengröße der mikrokristallinen Zellulose 100 µm oder weniger beträgt.

3. Zusammensetzung nach den Ansprüchen 1 oder 2, bei welcher das Polyacetal ein Homopolymeres ist und das Polymere der Komponente (a) im wesentlichen frei von sauren Materialien und basischen Materialien ist.

4. Zusammensetzung nach Anspruch 1, bei welcher das Polymere der Komponente (a) 0,15 bis 1,5, vorzugsweise 0,2 bis 1,0 Gew.-% der Zusammensetzung ausmacht.

5. Zusammensetzung nach Anspruch 1, bei welcher die zahlendurchschnittliche Teilchengröße des Polymeren der Komponente (a) in der Zusammensetzung weniger als 5 µm, vorzugsweise weniger als 2 µm beträgt.

6. Zusammensetzung nach Anspruch 1, bei welcher das Polymere der Komponente (a) dadurch gekennzeichnet ist, daß sein Hauptschmelzpunkt höher liegt als die Temperatur, bei welcher das Polyacetal in der Schmelze verarbeitet wird.

7. Zusammensetzung nach Anspruch 1, bei welcher das Polymere der Komponente (a) dadurch gekennzeichnet ist, daß es eine Schmelzflußgeschwindigkeit aufweist, die wesentlich kleiner ist als die des Polyacetals, vorzugsweise kleiner als ein Zehntel derjenigen des Polyacetals, wobei die Schmelzflußgeschwindigkeit bei der Temperatur bestimmt wird, bei der das Polyacetal in der Schmelze verarbeitet wird.

8. Zusammensetzung nach Anspruch 1, bei welcher das Verhältnis der formaldehydreaktiven Gruppen zu Kohlenstoffatomen im Grundgerüst des Polymeren der Komponente (a) im Bereich von 1:1-1:20, vorzugsweise im Bereich von 1:2-1:10, besonders bevorzugt im Bereich von 1:2-1:5 liegt.

**9.** Zusammensetzung nach Anspruch 1, bei welcher die Menge an formaldehydreaktiven Stickstoffgruppen, die direkt oder indirekt an den Atomen hängen, die sich im Grundgerüst des Polymeren der Komponente (a) befinden, wenigstens zehnmal größer ist, vorzugsweise beträchtlich größer ist als die Menge an den genannten Gruppen, die im Grundgerüst des Polymeren der Komponente (a) vorhanden sind.

**10.** Zusammensetzung nach Anspruch 1, bei welcher das Polymere der Komponente (a) ein Polymeres ist, das formaldehydreaktive Stickstoffgruppen enthält.

**11.** Zusammensetzung nach Anspruch 1, bei welcher das Polymere der Komponente (a) ein Polymeres ist, welches sowohl formaldehydreaktive Stickstoffgruppen als auch formaldehydreaktive Hydroxylgruppen enthält.

**12.** Zusammensetzung nach Anspruch 10, bei welcher das Polymere, das formaldehydreaktive Stickstoffgruppen enthält, Polyacrylamid oder Polymethacrylamid ist.

**13.** Zusammensetzung nach Anspruch 10, bei welcher das Polymere, das formaldehydreaktive Stickstoffgruppen enthält, Polyacrylamid ist, bei welchem wenigstens 90 Mol% der Wiederholunqseinheiten die Form

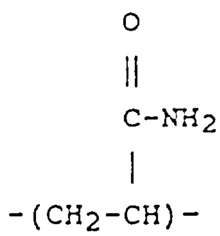

aufweisen.

**14.** Zusammensetzung nach Anspruch 1, bei welcher das Polymere der Komponente (a) dadurch gekennzeichnet ist, daß sein Hauptschmelzpunkt höher liegt als die Temperatur, bei welcher das Polyacetal in der Schmelze verarbeitet ist, und bei welcher das Polymere der Komponente (a) Polyacrylamid ist, wobei wenigstens 90 Mol% seiner Wiederholungseinheiten die Form

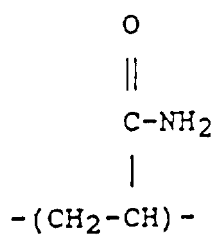

ausweisen.

**15.** Zusammensetzung nach Anspruch 1, bei welcher das Polymere der Komponente (a) ein Copolymeres von Hydroxypropylmethacrylat und einem Comonomeren ist, das ausgewählt ist aus der Gruppe bestehend aus Acrylamid, Methacrylamid oder Dimethylaminoethylmethacrylat.

**16.** Zusammensetzung nach Anspruch 1, bei welcher das Polymere der Komponente (a) ein Hydroxypropylmethacrylat/Acrylamid-Copolymers ist.

**17.** Zusammensetzung nach Anspruch 2, bei welcher die Komponente (a) 0,05 bis 1 Gew.-% der Zusammensetzung ausmacht.

**18.** Zusammensetzung nach Anspruch 2, bei welcher der Stabilisator gemäß Komponente (a) mikrokristalline Zellulose ist.

**19.** Zusammensetzung nach Anspruch 18, bei welcher die durchschnittliche Teilchengröße der mikrokristallinen Zellulose 50 µm oder weniger, vorzugsweise 25 µm oder weniger und besonders bevorzugt etwa 10 µm oder weniger beträgt.

**20.** Zusammensetzung nach Anspruch 18, bei welcher die mikrokristalline Zellulose einen Grenzpolymerisationsgrad von 125 bis 375, vorzugsweise 175 bis 225 Anhydroglukoseeinheiten aufweist.

**21.** Zusammensetzung nach Anspruch 2, bei welcher der Stabilisator gemäß Komponente (a) faserförmige Zellulose ist.

**22.** Zusammensetzung nach den Ansprüchen 1 oder 2, bei welcher das Polyacetalpolymere ein Copolymeres ist.

**23.** Zusammensetzung nach den Ansprüchen 1 oder 2, bei welcher das Polyacetal ein zahlendurchschnittliches Molekulargewicht von 10 000 bis 100 000 aufweist.

**24.** Zusammensetzung nach den Ansprüchen 1 oder 2, welche zusätzlich wenigstens ein Mittel aus der Gruppe der Costabilisatoren, Antioxidantien, Pigmente, Färbemittel, Verstärkungsmittel, UV-Stabilisatoren, Stabilisatoren auf der Basis eines gehinderten Amins, Glasfasern, Gleitmittel, Keimbildungsmittel, Zähigmacher und Füllstoffe umfaßt.

**25.** Formgegenstände, hergestellt aus der Zusammensetzung der Ansprüche 1 oder 2.

**26.** Verfahren zur Herstellung der Zusammensetzung nach den Ansprüchen 1 oder 2, umfassend das Mischen der Komponente (a) mit dem Polyacetalpolymeren gemäß Komponente (b) bei einer Temperatur oberhalb des Schmelzpunktes des Polyacetalpolymeren gemäß Komponente (b) und unterhalb der Temperatur, bei der ein Abbau der Komponenten auftritt.

## Revendications

**1.** Une composition de polyacétal thermoplastique constituée essentiellement de

(a) 0,05 à 3 pour cent en poids d'au moins un polymère qui ne fond pas à la température de mise en oeuvre du polyacétal (b) ou qui a un indice de fusion, mesuré selon la norme ASTM-D1238, inférieur au dixième de l'indice de fusion du polyacétal (b) et qui est choisi dans le groupe formé par les polymères contenant des groupes hydroxyle réactifs avec le formaldéhyde, les polymères contenant des groupes azotés réactifs avec le formaldéhyde et les polymères contenant à la fois des groupes hydroxyle réactifs avec le formaldéhyde et des groupes azotés réactifs avec le formaldéhyde,

à condition que les atomes du squelette du polymère auxquels sont attachés, directement ou indirectement, les groupes réactifs avec le formaldéhyde ne soient pas séparés les uns des autres par, en moyenne, plus de vingt atomes de chaîne, et à condition encore que la quantité des groupes azotés réactifs avec le formaldéhyde attachés, directement ou indirectement, aux atomes qui sont dans le squelette du polymère soit au moins trois fois plus grande que la quantité de groupes azotés réactifs avec le formaldéhyde présents dans le squelette du polymère, les groupes azotés réactifs avec le formaldéhyde étant formés d'un atome d'azote auquel un ou deux atomes d'hydrogène sont fixés,

(b) 97 à 99,95 pour cent en poids d'au moins un polyacétal,

étant entendu que les pourcentages susdits sont exprimés par rapport à la quantité totale des composants (a) et (b) seulement et avec la condition supplémentaire que le polymère du composant (a) ait une taille de particules moyenne en nombre inférieure à 10 micromètres dans la composition.

**2.** Une composition de polyacétal thermoplastique constituée essentiellement de

(a) 0,05 à 5 pour cent en poids d'un stabilisant choisi dans le groupe formé par la cellulose microcristalline et la cellulose fibreuse, et
(b) 95 à 99,95 pour cent en poids de polyacétal, étant entendu que les pourcentages susdits sont exprimés par rapport à la quantité totale des composants (a) et (b) seulement, et dans laquelle la taille moyenne des particules de la cellulose microcristalline est de 100 micromètres ou moins.

**3.** La composition des revendications 1 ou 2, dans laquelle le polyacétal est homopolymère et le polymère du composant (a) est sensiblement exempt de substances acides et de substances basiques.

**4.** La composition de la revendication 1, dans laquelle le polymère du composant (a) constitue 0,15 à 1,5, de préférence 0,2 à 1,0 pour cent en poids de la composition.

**5.** La composition de la revendication 1, dans lequel la taille de particules moyenne en nombre du polymère du composant (a) dans la composition est inférieure à 5 micromètres, de préférence inférieure à 2 micromètres.

**6.** La composition de la revendication 1, dans laquelle le polymère du composant (a) est caractérisé en ce que son point de fusion principal est supérieur à la température à laquelle le polyacétal est mis en oeuvre par fusion.

**7.** La composition de la revendication 1, dans laquelle le polymère du composant (a) est caractérisé en ce qu'il a un indice de fusion notablement inférieur à celui du polyacétal, de préférence inférieur au dixième de celui du polyacétal, ledit indice de fusion étant déterminé à la température à laquelle le polyacétal est mis en oeuvre par fusion.

**8.** La composition de la revendication 1, dans laquelle le rapport des groupes réactifs avec le formaldéhyde aux atomes de carbone du squelette du polymère du composant (a) se situe dans l'intervalle de 1:1 à 1:20, de préférence 1:2 à 1:10, très préférablement 1:2 à 1:5.

**9.** La composition de la revendication 1, dans laquelle la quantité de groupes azotés réactifs avec le formaldéhyde attachés, directement ou indirectement, aux atomes qui sont dans le squelette du polymère du composant (a) est au moins dix fois plus grande, de préférence notablement plus grande que la quantité desdits groupes présents dans le squelette du polymère du composant (a).

**10.** La composition de la revendication 1, dans laquelle le polymère du composant (a) est un polymère contenant des groupes azotés réactifs avec le formaldéhyde.

**11.** La composition de la revendication 1, dans laquelle le polymère du composant (a) est un polymère contenant à la fois des groupes azotés réactifs avec le formaldéhyde et des groupes hydroxyle réactifs avec le formaldéhyde.

**12.** La composition de la revendication 10, dans laquelle le polymère contenant des groupes azotés réactifs avec le formaldéhyde est un polyacrylamide ou un polyméthacrylamide.

**13.** La composition de la revendication 10, dans laquelle le polymère contenant des groupes azotés réactifs avec le formaldéhyde est un polyacrylamide dont au moins 90 moles pour cent des motifs récurrents sont de la forme

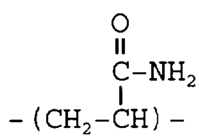

**14.** La composition de la revendication 1, dans laquelle le polymère du composant (a) est caractérisé en ce que son point de fusion principal est supérieur à la température à laquelle le polyacétal est mis en oeuvre par fusion, et dans laquelle le polymère du composant (a) est un polyacrylamide dont au moins 90 moles pour cent des motifs récurrents sont de la forme

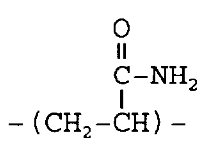

**15.** La composition de la revendication 1, dans laquelle le polymère du composant (a) est un copolymère de méthacrylate d'hydroxypropyle et d'un comonomère choisi dans le groupe formé par l'acrylamide, le méthacrylamide ou le méthacrylate de diméthylaminoéthyle.

**16.** La composition de la revendication 1, dans laquelle le polymère du composant (a) est un copolymère méthacrylate d'hydroxypropyle/acrylamide.

**17.** La composition de la revendication 2, dans laquelle le composant (a) constitue 0,05 à 1 pour cent en poids de la composition.

**18.** La composition de la revendication 2, dans laquelle le stabilisant du composant (a) est une cellulose microcristalline.

**19.** La composition de la revendication 18, dans laquelle la taille moyenne des particules de la cellulose microcristalline est de 50 micromètres ou moins, de préférence de 25 micromètres ou moins et très préférablement d'environ 10 micromètres ou moins.

**20.** La composition de la revendication 18, dans laquelle la cellulose microcristalline a un degré de polymérisation atteignant une limite de 125 à 375, de préférence 175 à 225 motifs d'anhydroglucose.

**21.** La composition de la revendication 2, dans laquelle le stabilisant du composant (a) est une cellulose fibreuse.

**22.** La composition des revendications 1 ou 2, dans laquelle le polyacétal est un copolymère.

**23.** La composition des revendications 1 ou 2, dans laquelle le polyacétal a un poids moléculaire moyen en nombre de 10 000 à 100 000.

**24.** La composition des revendications 1 ou 2, comprenant, de plus, au moins l'un de co-stabilisants, antioxydants, pigments, colorants, agents de renforcement, stabilisants à la lumière UV, stabilisants du type amine à empêchement stérique, fibres de verre, lubrifiants, agents de nucléation, agents améliorant la ténacité et charges.

**25.** Articles façonnés, fabriqués à partir de la composition des revendications 1 ou 2.

**26.** Un procédé pour préparer la composition des revendications 1 ou 2, comprenant l'opération de mélange du composant (a) avec le polyacétal du composant (b) à une température supérieure au point de fusion du polyacétal du composant (b) et inférieure à la température à laquelle apparaît une dégradation des composants.